# EUROPEAN PATENT APPLICATION

(11) **EP 4 836 330 A1**
(43) Date of publication of application: **04.11.2026**
(21) Application number: 25747444.5
(22) Date of filing: 07.01.2025
(51) Int. Cl.: H04L 1/00

(54) **CODE BLOCK PROCESSING METHOD AND APPARATUS, DEVICE, SYSTEM, STORAGE MEDIUM AND PROGRAM PRODUCT**

(30) Priority: 29.01.2024 CN 202410128460; 09.04.2024 CN 202410425565
(71) Applicant: Huawei Technologies Co., Ltd., Shenzhen, Guangdong 518129 (CN)
(72) Inventor: XIAO, Jie, Shenzhen, Guangdong 518129 (CN); XU, Li, Shenzhen, Guangdong 518129 (CN); SUN, Peng, Shenzhen, Guangdong 518129 (CN); SUN, Hongliang, Shenzhen, Guangdong 518129 (CN); CHEN, Jingfeng, Shenzhen, Guangdong 518129 (CN)
(74) Representative: MERH-IP Matias Erny Reichl Hoffmann Patentanwälte PartG mbB
(86) International application number: PCT/CN2025/071006
(87) International publication number: WO 2025/161868

(57) **Abstract**

This application relates to the field of communication technologies, and provides a code block processing method, apparatus, and system, a device, a storage medium, and a program product. The method includes: obtaining at least one service code block stream; and obtaining a multiplexed code block stream based on the at least one service code block stream, where the multiplexed code block stream includes hybrid code blocks and a multiplexed code block, the hybrid code blocks are code blocks obtained by scheduling code blocks in the at least one service code block stream according to a first scheduling ratio, the multiplexed code block carries multiplexing information, and the multiplexing information is used to process the multiplexed code block stream. Therefore, compared with multiplexing at a granularity of a bit, multiplexing the at least one service code block stream into one multiplexed code block stream at a granularity of a code block reduces complexity of a multiplexing process, and improves multiplexing efficiency. In addition, the multiplexed code block stream carries the multiplexing information, so that all nodes that receive the multiplexed code block stream can process the multiplexed code block stream based on the multiplexing information.

## Description

This application claims priorities to Chinese Patent Application No. 202410128460.6, filed on January 29, 2024 and entitled "DATA MULTIPLEXING TRANSMISSION METHOD", and to Chinese Patent Application No. 202410425565.8, filed on April 9, 2024 and entitled "CODE BLOCK PROCESSING METHOD, APPARATUS, AND SYSTEM, DEVICE, STORAGE MEDIUM, AND PROGRAM PRODUCT", both of which are incorporated herein by reference in their entireties.

### TECHNICAL FIELD

This application relates to the field of communication technologies, and in particular, to a code block processing method, apparatus, and system, a device, a storage medium, and a program product.

### BACKGROUND

With the development of communication technologies, there may be channels with different transmission rates in a network, for example, a low-speed channel of 5 gigabits per second (gigabits per second, Gbps) or a high-speed channel of 25 Gbps. Therefore, an interconnection issue exists between channels with different transmission rates, and how to multiplex a plurality of low-speed channels of traffic streams into a high-speed channel of traffic stream is an urgent problem to be resolved. Multiplexing may also be referred to as aggregation, convergence, or merging.

### SUMMARY

This application provides a code block processing method, apparatus, and system, a device, a storage medium, and a program product, to multiplex at least one service code block stream into one multiplexed code block stream for processing.

According to a first aspect, a code block processing method is provided. The method includes: obtaining at least one service code block stream; and obtaining a multiplexed code block stream based on the at least one service code block stream, where the multiplexed code block stream includes hybrid code blocks and a multiplexed code block, the hybrid code blocks are code blocks obtained by scheduling code blocks in the at least one service code block stream according to a first scheduling ratio, the multiplexed code block carries multiplexing information, and the multiplexing information is used to process the multiplexed code block stream.

In the method, code blocks in the at least one service code block stream are scheduled according to a fixed scheduling ratio, to obtain a multiplexed code block stream based on the scheduled code blocks, so that the at least one service code block stream is multiplexed into one multiplexed code block stream. Because multiplexing is directly performed at a granularity of a code block, a framing operation is not required in a multiplexing process, thereby avoiding a bandwidth waste caused by the framing operation. Compared with multiplexing at a granularity of a bit, the multiplexing at a granularity of a code block reduces complexity of the multiplexing process, and improves multiplexing efficiency. In addition, the multiplexed code block stream carries the multiplexing information, so that all nodes that receive the multiplexed code block stream can process the multiplexed code block stream based on the multiplexing information, thereby improving reliability of processing the multiplexed code block stream.

In a possible implementation, in a process of scheduling the code blocks in the at least one service code block stream according to the first scheduling ratio, if a first quantity of code blocks included in a first service code block stream is less than a second quantity of code blocks scheduled in the first service code block stream, a third quantity of placeholder code blocks are inserted. The first service code block stream is a code block stream in the at least one service code block stream, and the third quantity is a difference between the second quantity and the first quantity.

It should be noted that the code blocks included in the first service code block stream do not include scheduled code blocks. In other words, the first quantity is a quantity of remaining code blocks included in the first service code block stream, or the first quantity is a quantity of code blocks currently included in the first service code block stream. The remaining code blocks included in the first service code block stream or the code blocks currently included in the first service code block stream may be code blocks in the first service code block stream other than the scheduled code blocks, that is, unscheduled code blocks.

In this way, when a quantity of code blocks in a service code block stream does not meet a quantity of to-be-scheduled code blocks in the first scheduling ratio, it can be ensured, by inserting a placeholder code block, that the first scheduling ratio between service code block streams is fixed, thereby ensuring that code block processing performed according to the first scheduling ratio is accurate. For example, the service code block stream is accurately decomposed according to the first scheduling ratio in a demultiplexing process.

In a possible implementation, a manner of obtaining the at least one service code block stream may include: receiving a code block stream transmitted on at least one channel, where the code block stream transmitted on the at least one channel includes a first code block stream; and deleting all idle code blocks from the first code block stream, to obtain the first service code block stream, where the first service code block stream is a code block stream in the at least one service code block stream. If the scheduled code blocks include idle code blocks, the scheduled idle code blocks may be deleted by mistake in a forwarding process due to a frequency offset adjustment requirement. As a result, the first scheduling ratio between the scheduled code blocks is disrupted, making it difficult to perform corresponding code block processing according to the first scheduling ratio, for example, demultiplex the service code block stream according to the first scheduling ratio. In this manner, all the idle code blocks in the received code block stream transmitted on the at least one channel are deleted, so that the scheduled code blocks include no idle code blocks, thereby avoiding the problem.

In a possible implementation, the method further includes: inserting idle code blocks into the scheduled code blocks based on a frequency offset, where the frequency offset is a frequency offset existing between nodes configured to transmit the multiplexed code block stream. Optionally, the inserting the idle code blocks into the scheduled code blocks based on the frequency offset may include: sequentially transmitting the scheduled code blocks to obtain sequentially transmitted code blocks, and inserting the idle code blocks into the sequentially transmitted code blocks.

In this manner, the idle code blocks are inserted, so that the multiplexed code block stream supports frequency offset adjustment, thereby meeting a frequency offset adjustment requirement between nodes. In addition, when all the idle code blocks in the received code block stream transmitted on the at least one channel are deleted, the idle code blocks inserted based on the frequency offset herein may occupy a bandwidth saved by deleting the idle code blocks, thereby avoiding extra bandwidth overheads caused by inserting the idle code blocks.

In a possible implementation, there are at least two idle code blocks, and a Hamming distance between the at least two idle code blocks meets a distance requirement. The at least two idle code blocks whose Hamming distance meets the distance requirement are used, so that when an error occurs in some bits in any one of the at least two idle code blocks, the at least two idle code blocks can be distinguished based on another idle code block in the at least two idle code blocks, thereby improving reliability of the idle code blocks, and reducing a risk of a failure in processing the multiplexed code block stream caused by the error in the idle code block.

In a possible implementation, the hybrid code blocks include a concealed code block, and the concealed code block is obtained by concealing a control code block in the at least one service code block stream. Before the at least one service code block stream is scheduled, the control code block in the at least one service code block stream may be concealed; or after the at least one service code block stream is scheduled, the control code block in the at least one service code block stream may be concealed. The control block in the at least one service code block stream is concealed, so that the control block in the at least one service code block stream is made invisible to a forwarding node that transmits the multiplexed code block stream, thereby avoiding incorrect processing of the control block in the service code block stream by the forwarding node.

In a possible implementation, the multiplexed code block is a first overhead code block, the multiplexing information is carried in a reserved field of the first overhead code block, and the first overhead code block is used to extract the hybrid code blocks from the multiplexed code block stream. The first overhead code block is a code block used to transmit control information in the flexible Ethernet, and the first overhead code block is extended to carry the multiplexing information, thereby avoiding extra code block overheads caused by carrying the multiplexing information, and reducing implementation complexity of carrying the multiplexing information.

In a possible implementation, the multiplexed code block is a multiplexing indicator code block, and the multiplexing information is carried in a specified field of the multiplexing indicator code block. In this case, the multiplexed code block stream further includes a second overhead code block, and the second overhead code block is used to extract the multiplexing indicator code block and the hybrid code blocks from the multiplexed code block stream. In this way, the multiplexing information is carried in the newly added multiplexing indicator code block, so that the multiplexing information can be forwarded in the multiplexing indicator code block along with the hybrid code block.

In a possible implementation, a service code block stream in the at least one service code block stream is obtained by scheduling at least one sub-service code block stream according to a second scheduling ratio. In other words, the service code block stream on which current multiplexing is performed may be a multiplexed code block stream, so that the method can implement a plurality of times of multiplexing.

In a possible implementation, the first scheduling ratio is determined based on a bandwidth or a transmission rate of the at least one service code block stream. In this way, the bandwidth or the transmission rate of the at least one service code block stream matches a frequency at which the at least one service code block stream is scheduled according to the first scheduling ratio.

In a possible implementation, after the multiplexed code block stream is obtained, an egress port may be determined based on a first service identifier of the multiplexed code block stream, and the multiplexed code block stream is sent through the egress port, where a transmission rate of the multiplexed code block stream is greater than the transmission rate of the at least one service code block stream. The at least one service code block stream is multiplexed into one multiplexed code block stream for transmission, so that the transmission rate of the at least one service code block stream is increased, thereby effectively using a large bandwidth of the egress port, and avoiding a bandwidth waste.

In a possible implementation, the multiplexing information includes at least one of the first service identifier or scheduling information of the multiplexed code block stream, and the scheduling information includes at least one of the first scheduling ratio or a second service identifier corresponding to the at least one service code block stream. The first service identifier included in the multiplexing information can be used to forward the multiplexed code block stream, and the scheduling information included in the multiplexing information can be used to demultiplex the multiplexed code block stream. At least one of the first service identifier or the scheduling information is carried in the multiplexing information, which can ensure more reliable processing of the multiplexed code block stream.

According to a second aspect, a code block processing method is provided. The method includes: obtaining a multiplexed code block stream, where the multiplexed code block stream includes hybrid code blocks and a multiplexed code block, the hybrid code blocks are code blocks obtained by scheduling code blocks in at least one service code block stream according to a first scheduling ratio, and the multiplexed code block carries multiplexing information; and processing the multiplexed code block stream based on the multiplexing information.

In the method, after the multiplexed code block stream is obtained, the multiplexed code block stream can be processed based on the multiplexing information carried in the multiplexed code block in the multiplexed code block stream. In this way, the at least one service code block stream is multiplexed into one multiplexed code block stream for processing, and accuracy of processing the multiplexed code block stream is ensured by using the multiplexing information.

In a possible implementation, the multiplexing information includes scheduling information, and the scheduling information includes the first scheduling ratio; and the processing the multiplexed code block stream based on the multiplexing information may include: extracting the hybrid code blocks from the multiplexed code block stream, and demultiplexing the at least one service code block stream from the hybrid code blocks according to the first scheduling ratio. In this way, the multiplexed code block stream can be demultiplexed based on the scheduling information.

In a possible implementation, the multiplexing information includes scheduling information, and the scheduling information includes a second service identifier corresponding to the at least one service code block stream; and the processing the multiplexed code block stream based on the multiplexing information may include: determining the first scheduling ratio based on the second service identifier corresponding to the at least one service code block stream; and extracting the hybrid code blocks from the multiplexed code block stream, and demultiplexing the at least one service code block stream from the hybrid code blocks according to the first scheduling ratio.

In a possible implementation, the demultiplexing the at least one service code block stream from the hybrid code blocks according to the first scheduling ratio may include: when the hybrid code blocks include idle code blocks, deleting the idle code blocks from the hybrid code blocks; and demultiplexing, according to the first scheduling ratio, the at least one service code block stream from the hybrid code blocks having the idle code blocks deleted. The idle code blocks are deleted from the hybrid code blocks, so that the service code block stream demultiplexed based on the first scheduling ratio is more accurate.

In a possible implementation, the demultiplexing the at least one service code block stream from the hybrid code blocks according to the first scheduling ratio may include: demultiplexing at least one initial code block stream from the hybrid code blocks according to the first scheduling ratio, where the at least one initial code block stream includes a first initial code block stream; and when the first initial code block stream includes a placeholder code block, deleting the placeholder code block from the first initial code block stream, to obtain a first service code block stream, where the first service code block stream is a code block stream in the at least one service code block stream. The placeholder code block is deleted, so that the demultiplexed service code block stream includes only service code blocks, and the demultiplexed service code blocks are more accurate.

In a possible implementation, the hybrid code blocks include a concealed code block, and in a process of demultiplexing the at least one service code block stream from the hybrid code blocks according to the first scheduling ratio, the concealed code block is restored to a control code block. The restoration to the control code block ensures that the demultiplexed service code block stream remains unchanged.

In a possible implementation, a service code block stream in the at least one service code block stream is obtained by scheduling at least one sub-service code block stream according to a second scheduling ratio, and the multiplexing information further includes the second scheduling ratio; and after the at least one service code block stream is demultiplexed from the hybrid code blocks according to the first scheduling ratio, the at least one sub-service code block stream is demultiplexed from the service code block stream according to the second scheduling ratio. In this way, a plurality of times of demultiplexing can be implemented by using the multiplexing information.

In a possible implementation, a service code block stream in the at least one service code block stream is obtained by scheduling at least one sub-service code block stream according to a second scheduling ratio, and the multiplexing information further includes a third service identifier corresponding to the at least one sub-service code block stream; and after the at least one service code block stream is demultiplexed from the hybrid code blocks according to the first scheduling ratio, the second scheduling ratio is determined based on the third service identifier corresponding to the at least one sub-service code block stream; and the at least one sub-service code block stream is demultiplexed from the service code block stream according to the second scheduling ratio. In this way, a plurality of times of demultiplexing can be implemented by using the multiplexing information.

In a possible implementation, the multiplexing information includes a first service identifier of the multiplexed code block stream; and the processing the multiplexed code block stream based on the multiplexing information may include: forwarding the multiplexed code block stream based on the first service identifier. In this way, the multiplexed code block stream can be forwarded based on the first service identifier.

In a possible implementation, the multiplexed code block is a first overhead code block, and the multiplexing information is carried in a reserved field of the first overhead code block; and the forwarding the multiplexed code block stream based on the first service identifier may include: stripping the first overhead code block from the multiplexed code block stream at an ingress port, to obtain the hybrid code blocks; and sending the hybrid code blocks to an egress port determined based on the first service identifier, and sending the hybrid code blocks through the egress port after a third overhead code block is inserted, where the third overhead code block carries the multiplexing information. The first overhead code block is extended to carry the multiplexing information, thereby avoiding extra code block overheads caused by carrying the multiplexing information, and reducing implementation complexity of carrying the multiplexing information.

In a possible implementation, the multiplexed code block is a multiplexing indicator code block, the multiplexing information is carried in a specified field of the multiplexing indicator code block, and the multiplexed code block stream further includes a second overhead code block; and the forwarding the multiplexed code block stream based on the first service identifier may include: stripping the second overhead code block from the multiplexed code block stream at an ingress port, to obtain the multiplexing indicator code block and the hybrid code blocks; and sending the multiplexing indicator code block and the hybrid code blocks to an egress port determined based on the first service identifier, and sending the multiplexing indicator code block and the hybrid code blocks through the egress port after a fourth overhead code block is inserted. The multiplexing information is carried in the multiplexing indicator code block, so that the multiplexing information can be forwarded along with the hybrid code block in the multiplexing indicator code block, thereby avoiding copy of the multiplexing information from the ingress port to the egress port.

In a possible implementation, the obtaining the multiplexed code block stream may include: receiving the multiplexed code block stream, where the multiplexed code block stream further includes idle code blocks inserted based on a frequency offset; and the processing the multiplexed code block stream based on the multiplexing information may include: performing frequency offset adjustment on the multiplexed code block stream based on the frequency offset. For example, when an arrival rate of the multiplexed code block stream is low, an idle code block is inserted to avoid stream disruption; or when an arrival rate of the multiplexed code block stream is high, an idle code block is deleted from the multiplexed code block stream to avoid code block backlog. A forwarding rate of the multiplexed code block stream is adapted to a forwarding node through frequency offset adjustment.

According to a third aspect, a code block processing apparatus is provided. The apparatus includes: a transceiver module, configured to perform a receiving and/or sending related operation according to any one of the first aspect or the possible implementations of the first aspect; and a processing module, configured to perform an operation other than the receiving and/or sending related operation according to any one of the first aspect or the possible implementations of the first aspect; or a transceiver module, configured to perform a receiving and/or sending related operation according to any one of the second aspect or the possible implementations of the second aspect; and a processing module, configured to perform an operation other than the receiving and/or sending related operation according to any one of the second aspect or the possible implementations of the second aspect.

In a possible implementation, the transceiver module includes a receiving module and/or a sending module. The receiving module is configured to perform the receiving related operation, and the sending module is configured to perform the sending related operation.

When the transceiver module is configured to perform the receiving and/or sending related operation in any one of the first aspect or the possible implementations of the first aspect, and the processing module is configured to perform the operation other than the receiving and/or sending related operation in any one of the first aspect or the possible implementations of the first aspect, the processing module is configured to: obtain at least one service code block stream; and obtain a multiplexed code block stream based on the at least one service code block stream, where the multiplexed code block stream includes hybrid code blocks and a multiplexed code block, the hybrid code blocks are code blocks obtained by scheduling code blocks in the at least one service code block stream according to a first scheduling ratio, the multiplexed code block carries multiplexing information, and the multiplexing information is used to process the multiplexed code block stream.

In a possible implementation, the processing module is further configured to: in a process of scheduling the code blocks in the at least one service code block stream according to the first scheduling ratio, if a first quantity of code blocks included in a first service code block stream is less than a second quantity of code blocks scheduled in the first service code block stream, insert a third quantity of placeholder code blocks, where the first service code block stream is a code block stream in the at least one service code block stream, and the third quantity is a difference between the second quantity and the first quantity.

In a possible implementation, the transceiver module is configured to receive a code block stream transmitted on at least one channel, where the code block stream transmitted on the at least one channel includes a first code block stream; and the processing module is configured to delete all idle code blocks from the first code block stream, to obtain the first service code block stream, where the first service code block stream is a code block stream in the at least one service code block stream.

In a possible implementation, the processing module is further configured to insert idle code blocks into the scheduled code blocks based on a frequency offset, where the frequency offset is a frequency offset existing between nodes configured to transmit the multiplexed code block stream, there are at least two idle code blocks, and a Hamming distance between the at least two idle code blocks meets a distance requirement.

In a possible implementation, the hybrid code blocks include a concealed code block, and the concealed code block is obtained by concealing a control code block in the at least one service code block stream.

In a possible implementation, the multiplexed code block is a first overhead code block, the multiplexing information is carried in a reserved field of the first overhead code block, and the first overhead code block is used to extract the hybrid code blocks from the multiplexed code block stream.

In a possible implementation, the multiplexed code block is a multiplexing indicator code block, the multiplexing information is carried in a specified field of the multiplexing indicator code block, the multiplexed code block stream further includes a second overhead code block, and the second overhead code block is used to extract the multiplexing indicator code block and the hybrid code blocks from the multiplexed code block stream.

In a possible implementation, a service code block stream in the at least one service code block stream is obtained by scheduling at least one sub-service code block stream according to a second scheduling ratio.

In a possible implementation, the first scheduling ratio is determined based on a bandwidth or a transmission rate of the at least one service code block stream.

In a possible implementation, the transceiver module is further configured to: determine an egress port based on a first service identifier of the multiplexed code block stream, and send the multiplexed code block stream through the egress port, where a transmission rate of the multiplexed code block stream is greater than the transmission rate of the at least one service code block stream.

In a possible implementation, the multiplexing information includes at least one of the first service identifier or scheduling information of the multiplexed code block stream, and the scheduling information includes at least one of the first scheduling ratio or a second service identifier corresponding to the at least one service code block stream.

When the transceiver module is configured to perform the receiving and/or sending related operation in any one of the second aspect or the possible implementations of the second aspect, and the processing module is configured to perform the operation other than the receiving and/or sending related operation in any one of the second aspect or the possible implementations of the second aspect, the processing module is configured to: obtain a multiplexed code block stream, where the multiplexed code block stream includes hybrid code blocks and a multiplexed code block, the hybrid code blocks are code blocks obtained by scheduling code blocks in at least one service code block stream according to a first scheduling ratio, and the multiplexed code block carries multiplexing information; and process the multiplexed code block stream based on the multiplexing information.

In a possible implementation, the multiplexing information includes scheduling information, and the scheduling information includes the first scheduling ratio; and the processing module is configured to: extract the hybrid code block from the multiplexed code block stream, and demultiplex the at least one service code block stream from the hybrid code blocks according to the first scheduling ratio.

In a possible implementation, the processing module is configured to: when the hybrid code blocks include idle code blocks, delete the idle code blocks from the hybrid code blocks; and demultiplex, according to the first scheduling ratio, the at least one service code block stream from the hybrid code blocks having the idle code blocks deleted.

In a possible implementation, the processing module is configured to: demultiplex at least one initial code block stream from the hybrid code blocks according to the first scheduling ratio, where the at least one initial code block stream includes a first initial code block stream; and when the first initial code block stream includes placeholder code blocks, delete the placeholder code block from the first initial code block stream, to obtain a first service code block stream, where the first service code block stream is a code block stream in the at least one service code block stream.

In a possible implementation, the hybrid code blocks include a concealed code block, and in a process of demultiplexing the at least one service code block stream from the hybrid code blocks according to the first scheduling ratio, the concealed code block is restored to a control code block.

In a possible implementation, a service code block stream in the at least one service code block stream is obtained by scheduling at least one sub-service code block stream according to a second scheduling ratio, and the scheduling information further includes the second scheduling ratio; and the processing module is further configured to demultiplex the at least one sub-service code block stream from the service code block stream according to the second scheduling ratio.

In a possible implementation, the multiplexing information includes a first service identifier of the multiplexed code block stream; and the processing module is configured to forward the multiplexed code block stream based on the first service identifier.

In a possible implementation, the multiplexed code block is a first overhead code block, and the multiplexing information is carried in a reserved field of the first overhead code block; the processing module is configured to strip the first overhead code block from the multiplexed code block stream at an ingress port, to obtain the hybrid code blocks; and the transceiver module is configured to: send the hybrid code blocks to an egress port determined based on the first service identifier, and send the hybrid code blocks through the egress port after a third overhead code block is inserted, where the third overhead code block carries the multiplexing information.

In a possible implementation, the multiplexed code block is a multiplexing indicator code block, the multiplexing information is carried in a specified field of the multiplexing indicator code block, and the multiplexed code block stream further includes a second overhead code block; the processing module is configured to strip the second overhead code block from the multiplexed code block stream at an ingress port, to obtain the multiplexing indicator code block and the hybrid code blocks; and the transceiver module is configured to: send the multiplexing indicator code block and the hybrid code blocks to an egress port determined based on the first service identifier, and send the multiplexing indicator code block and the hybrid code blocks through the egress port after a fourth overhead code block is inserted.

In a possible implementation, the transceiver module is configured to receive the multiplexed code block stream, where the multiplexed code block stream further includes idle code blocks inserted based on a frequency offset; and the processing module is configured to perform frequency offset adjustment on the multiplexed code block stream based on the frequency offset.

According to a fourth aspect, a network device is provided. The network device includes a processor, the processor is coupled to a memory, the memory stores at least one program instruction or code, and the at least one program instruction or the code is loaded and executed by the processor, to cause the network device to implement the code block processing method according to either of the first aspect and the second aspect.

Optionally, there are one or more processors, and there are one or more memories.

Optionally, the memory may be integrated with the processor, or the memory and the processor are separately disposed.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a fifth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the communication apparatus is caused to perform the code block processing method in any one of the first aspect or the possible implementations of the first aspect, or perform the code block processing method in any one of the second aspect or the possible implementations of the second aspect.

According to a sixth aspect, a code block processing system is provided. The code block processing system includes a first communication apparatus and a second communication apparatus.

The first communication apparatus is configured to perform the code block processing method according to any one of the first aspect or the possible implementations of the first aspect, and the second communication apparatus is configured to perform the code block processing method according to any one of the second aspect or the possible implementations of the second aspect.

According to a seventh aspect, a computer-readable storage medium is provided. The storage medium stores at least one instruction, and the instruction is loaded and executed by a processor, to cause a computer to implement the code block processing method according to any one of the first aspect or the possible implementations of the first aspect, or implement the code block processing method according to any one of the second aspect or the possible implementations of the second aspect.

According to an eighth aspect, a computer program (product) is provided. The computer program (product) includes computer program code, and when the computer program code is run by a computer, the computer is caused to perform the code block processing method according to the foregoing aspects.

According to a ninth aspect, a chip is provided, including a processor, configured to invoke instructions from a memory and run the instructions stored in the memory, to cause a communication device on which the chip is installed to perform the code block processing method according to the foregoing aspects.

According to a tenth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the code block processing method according to the foregoing aspects.

It should be understood that, for beneficial effects achieved by the technical solutions in the second aspect to the tenth aspect and the corresponding possible implementations of this application, refer to the technical effects of the first aspect and the corresponding possible implementations of the first aspect. Details are not described herein again.

### BRIEF DESCRIPTION OF DRAWINGS

FIG. 1 is a diagram of an open system interconnection (open system interconnection, OSI) model and a flexible Ethernet (flexible Ethernet, FlexE) framework according to an embodiment of this application;
FIG. 2 is a diagram of transmission in a slicing packet network (slicing packet network, SPN) network according to an embodiment of this application;
FIG. 3 is a diagram of interconnection between coarse-grained and fine-grained channels according to a related technology;
FIG. 4 is a diagram of interconnection between coarse-grained and fine-grained channels according to an embodiment of this application;
FIG. 5 is a diagram of a data multiplexing process in a fine grain metro transport network (fine grain MTN, fgMTN) according to a related technology;
FIG. 6 is a diagram of a multiplexing transmission process according to an embodiment of this application;
FIG. 7 is a diagram of a structure of a network device according to an embodiment of this application;
FIG. 8a to FIG. 8d are diagrams of deployment of a multiplexing module and a demultiplexing module according to an embodiment of this application;
FIG. 9 is a flowchart of a code block processing method according to an embodiment of this application;
FIG. 10 is a diagram of a format of a placeholder code block according to an embodiment of this application;
FIG. 11 is a diagram of another format of a placeholder code block according to an embodiment of this application;
FIG. 12 is a diagram of a format of an idle code block according to an embodiment of this application;
FIG. 13a and FIG. 13b are diagrams of other formats of idle code blocks according to an embodiment of this application;
FIG. 14 is a diagram of a format of a first overhead code block according to an embodiment of this application;
FIG. 15 is a diagram of a format of a multiplexing indicator code block according to an embodiment of this application;
FIG. 16 is a diagram of another format of a multiplexing indicator code block according to an embodiment of this application;
FIG. 17 is a system block diagram of a multiplexing process according to an embodiment of this application;
FIG. 18 is a flowchart of a multiplexing process according to an embodiment of this application;
FIG. 19 is a flowchart of another code block processing method according to an embodiment of this application;
FIG. 20 is a system block diagram of a forwarding process according to an embodiment of this application;
FIG. 21 is a flowchart of a forwarding process according to an embodiment of this application;
FIG. 22 is a system block diagram of a demultiplexing process according to an embodiment of this application;
FIG. 23 is a flowchart of a demultiplexing process according to an embodiment of this application;
FIG. 24 is a system block diagram of a multiplexing process and a demultiplexing process according to an embodiment of this application;
FIG. 25 is a diagram of a scenario of a plurality of multiplexing processes according to an embodiment of this application;
FIG. 26 is a diagram of a format of a service identifier according to an embodiment of this application;
FIG. 27 is a diagram of a structure of a code block processing apparatus according to an embodiment of this application;
FIG. 28 is a diagram of a structure of a network device according to an embodiment of this application; and
FIG. 29 is a diagram of a structure of another network device according to an embodiment of this application.

### DESCRIPTION OF EMBODIMENTS

To make the objectives, technical solutions, and advantages of this application clearer, the following further describes the implementations of this application in detail with reference to the accompanying drawings.

In the field of communication technologies, as a transmission rate of a transmission channel continuously increases, there may be a problem of interconnection between channels with different transmission rates in a communication network. Using a FlexE technology as an example, the FlexE technology is a lightweight enhancement of the conventional Ethernet, and can implement service isolation and network slicing. The FlexE technology may be used to divide a bandwidth of an Ethernet interface into a plurality of slots (slot) that carry data. Different slots are hard isolated from each other, and the slot may also be referred to as a channel.

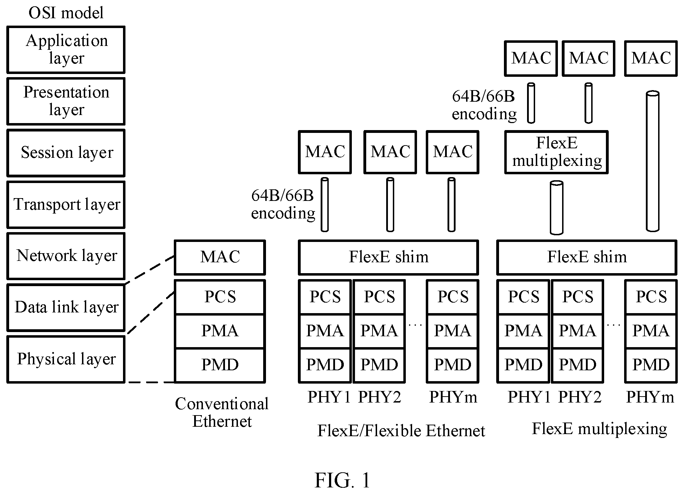

As shown in FIG. 1, in an OSI model, layers from bottom to top are: a physical layer, a data link layer, a network layer, a transport layer, a session layer, a presentation layer, and an application layer. The application layer is a layer that users directly contact with and provides various network services and applications. The presentation layer is responsible for data formatting and conversion to ensure that data of different systems can be correctly interpreted and understood, and handles data encryption and compression. The session layer manages sessions between different hosts, and establishes, maintains, and terminates communication connections to ensure reliable data transmission. The transport layer is responsible for end-to-end communication and provides functions such as data segmentation, traffic control, and error recovery. The network layer is responsible for data routing and forwarding, and transmitting data packets from a source host to a destination host. The data link layer organizes original bit streams into frames and identifies devices by using physical addresses. The physical addresses are medium access control (medium access control, MAC) addresses. The data link layer may be referred to as a MAC layer.

The physical (physical, PHY) layer is the bottom layer of a network, and is responsible for transmitting original bit streams and transmitting data from one device to another, involving physical features such as voltage and optical signals. The physical layer includes a physical coding sublayer (physical coding sublayer, PCS), a physical medium attachment (physical medium attachment, PMA) layer, and a physical media dependent (physical media dependent, PMD) sublayer. The PCS mainly includes line coding and cyclic redundancy check (cyclic redundancy check, CRC) coding. The PMA integrates SERDES, and SERDES is a serial-to-parallel converter mainly used for serialization and deserialization. The PMD implements optical-to-electrical/electrical-to-optical conversion.

A core function of the FlexE technology is implemented through an intermediate layer FlexE shim (shim) added between Ethernet L2 and L1 layers. The FlexE shim is also referred to as an L1.5 layer. The L2 layer is a data link layer, and the L1 layer is a physical layer. As shown in FIG. 1, the FlexE shim may combine a plurality of Ethernet interfaces to form a FlexE group (group). The Ethernet interface is represented by PHY, that is, the FlexE group includes PHY1 to PHYm, where m is a positive integer greater than 2. The FlexE shim may divide each PHY in the FlexE group into a plurality of slots in a time division multiplexing (time division multiplexing, TDM) manner, and a group of slots corresponding to each PHY is referred to as a calendar (calendar). An Ethernet frame in an original data stream of a FlexE client (client) is divided into data blocks (block), for example, 64-bit (bit, b)/66b-encoded data blocks. The divided data blocks may be distributed to some slots of some PHYs in the FlexE group by using the FlexE shim. Each FlexE client may be specified to exclusively occupy one or more slots, to obtain deterministic bandwidth allocation, and implement conflict-free, hard-isolated, and deterministic transmission with another FlexE client.

A network developed based on the FlexE technology, for example, an SPN or a metro transport network (metro transport network, MTN), can not only perform FlexE slicing on the Ethernet interface, but also can be enhanced with a FlexE channel cross-connect function and a dynamic and flexible operations, administration, and maintenance (operations, administration, and maintenance, OAM) capability, to create an end-to-end resource-dedicated transmission channel from a network ingress to a network egress, that is, an end-to-end network slice. The FlexE channel cross-connect function, that is, a channel L1.5 layer forwarding function, refers to forwarding based on a bit block at an Ethernet physical layer. This omits a processing process in which an L1 layer code block is first restored to a packet, then the packet is forwarded, and then the packet is converted into a code block in conventional L2/L3 layer forwarding, thereby reducing a forwarding delay. The L3 layer is a network layer.

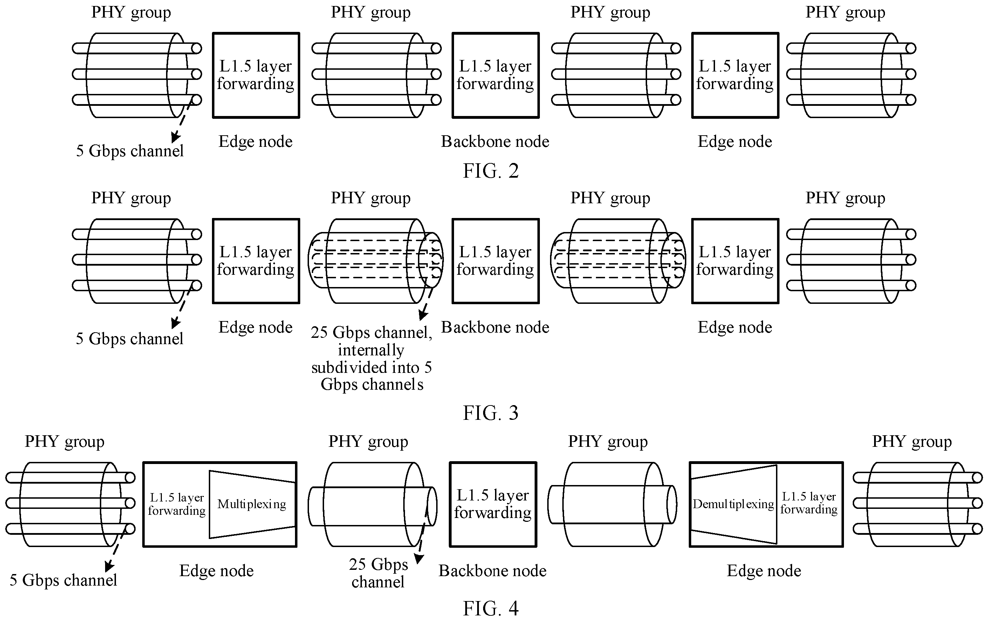

For example, for a 100 gigabit Ethernet (gigabit Ethernet, GE) Ethernet interface, FlexE may be divided into 20 slots, and a bandwidth corresponding to each slot is 5 gigabits per second (gigabits per second, Gbps). An SPN network shown in FIG. 2 includes an edge node, a backbone node, and an edge node. The nodes are connected by using a PHY group, and the PHY group includes a plurality of 5 Gbps channels. Each network node can implement an L1.5 layer forwarding function based on the 5 Gbps channel.

As Ethernet interfaces evolve to 800 GE/1.6 Terabit Ethernet (Terabit Ethernet, TE), FlexE slicing granularity is also increasing from 5 Gbps to 25 Gbps or even 100 Gbps. High-bandwidth interfaces of 800 GE/1.6 TE are usually first applied to backbone nodes, while other edge nodes continue to use low-bandwidth interfaces of 100 GE/200 GE/400 GE with a 5 Gbps slicing granularity for a long time. Therefore, in the SPN/MTN network, there is a problem of interconnection between two channels of different specifications (that is, 5 Gbps channels and 25 Gbps channels).

In a related technology, a problem of interconnection between coarse-grained and fine-grained channels is resolved by normalizing the channels to a basic granularity (or a minimum granularity). As shown in FIG. 3, a basic granularity of a 5 Gbps channel is used as an example. Even if a backbone node uses a FlexE slice granularity of 25 Gbps on a high-bandwidth interface, to interconnect with the 5 Gbps channel, a 25 Gbps channel is further subdivided into a plurality of 5 Gbps channels, so that each 5 Gbps service exclusively occupies a 5 Gbps hard channel in an end-to-end manner across the entire network, that is, the entire network is fully interconnected with the fine-grained 5 Gbps channels.

However, this related technology requires the backbone node to obtain each 5 Gbps service through parsing, and then perform switching and forwarding for each 5 Gbps service. Consequently, backbone nodes face large-scale channel cross-connect and connection management, which makes the scale of backbone nodes a bottleneck for the entire network, limiting an access capacity of the entire network. That is, although the problem of interconnection between coarse-grained and fine-grained channels is resolved, a problem of an excessively large operation and maintenance management scale for backbone nodes is caused.

In addition to the foregoing problem of interconnection between coarse-grained and fine-grained channels, the rapid growth of the scale of the SPN network leads to the formation of a large quantity of 5 Gbps channel connections on the backbone nodes, which poses challenges to network operation and maintenance management for the backbone nodes. Therefore, a plurality of service channels of a same path need to be multiplexed into a single service channel, thereby reducing the scale of channel cross-connect management of the backbone nodes.

As shown in FIG. 4, an edge node at a network ingress multiplexes services of a plurality of low-speed channels (for example, 5 Gbps channels) into a single high-speed channel (for example, a 25 Gbps channel), a backbone node performs L1.5 layer forwarding through the high-speed channel, and an edge node at a network egress demultiplexes the services of the plurality of low-speed channels from the single high-speed channel. The multiplexing (multiplexing) may also be referred to as aggregation, convergence, or merging, and is aggregating at least one low-speed service into one high-speed service, or multiplexing a plurality of low-speed services into a transmission resource or a processing resource to which a single high-speed service belongs. The demultiplexing (demultiplexing) may also be referred to as deaggregation, deconvergence, or splitting. The demultiplexing is a reverse process of the multiplexing, and is decomposing and restoring at least one low-speed service from a single high-speed service.

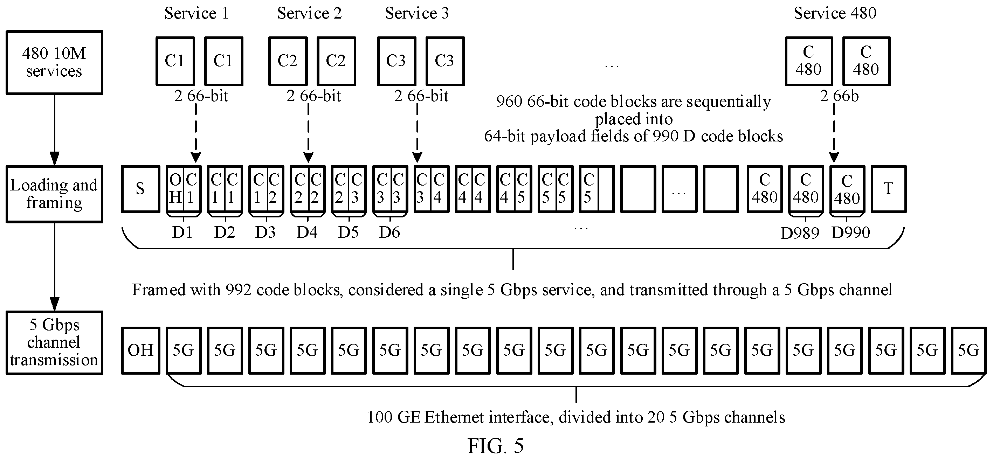

In fgMTN, a multiplexing technology is used. fgMTN further subdivides the 5 Gbps channel in MTN into 480 10 Mbps fine-grained channels, reserving the remaining 200 Mbps of bandwidth for overhead. fgMTN performs multiplexing and demultiplexing between these 480 10 Mbps channels and a single 5 Gbps channel. The multiplexing process of fgMTN is shown in FIG. 5. In each multiplexing process, each 10 Mbps service provides two 64b/66b-encoded code blocks. In other words, the code block has a fixed length of 66 bits, that is, 480 10 Mbps services provide 960 66-bit code blocks in total, and the 960 66-bit code blocks can be precisely loaded into 64-bit payload (payload) fields of 990 data (data block, D) code blocks. The D code block includes 66 bits, with the first 2 bits being a code block header and the following 64 bits being a payload field.

After the 960 66-bit code blocks are sequentially placed into the 64-bit payload fields of the 990 D code blocks, one start (start, S) code block and one tail (tail, T) code block are respectively added to the header and the tail of the loaded 990 D code blocks. The S code block represents the start of an Ethernet frame, and the T code block represents the end of an Ethernet frame. Therefore, by loading and framing, the code blocks from the 480 10 Mbps services are concealed in the 990 data code blocks, forming a fixed code block combination of S+990*D+T. The code block combination is also referred to as a multiplexed frame. The multiplexed frame may be considered as a single Ethernet service transmitted through a 5 Gbps channel. That is, the 5 Gbps channel is unaware of whether carried code blocks are from a single service or a plurality of services.

However, in the multiplexing technology used in fgMTN, the 66-bit code block of each service is loaded into the 64-bit payload field of the D code block of the multiplexed frame. Due to the length mismatch, the code blocks of each service do not one-to-one correspond to the D blocks of the multiplexed frame. As a result, bit-granularity concatenation is required in the multiplexed frame during multiplexing, and sliding bit extraction from the multiplexed frame to restore the code blocks of each service during demultiplexing. This results in high processing complexity and significant buffering overheads. In addition, the introduction of 64-bit payload loading, the S code block, and the T7 code block during framing leads to high bandwidth overheads. As a result, a single 5 Gbps channel can only support the multiplexing of the 480 10 Mbps channels, wasting 200 Mbps of bandwidth.

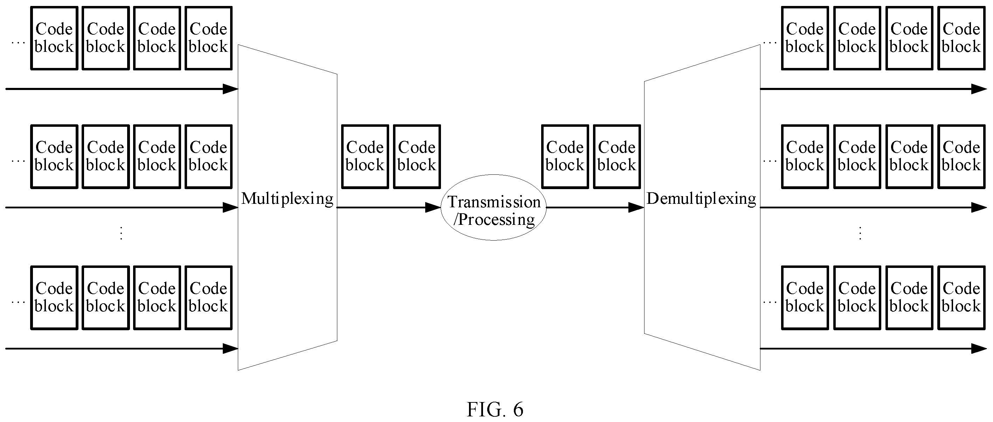

Embodiments of this application provide a code block processing method. A transmitting node does not need to perform loading and framing, and can multiplex at least one piece of low-speed service data into one piece of high-speed service data for transmission, thereby reducing the processing scale of intermediate forwarding nodes. In addition, a receiving node can demultiplex each piece of low-speed service data. For example, as shown in FIG. 6, code block streams of at least one service are first aggregated into one code block stream by using a multiplexing method, and then sent to a transmission/processing unit. The code block streams of the at least one service reuse a same transmission/processing unit. After the processing, the code block stream of each service is restored by using a demultiplexing method.

The data transmission method may be applied to any scenario in which at least one piece of data is aggregated for processing, for example, a scenario in which transmission channels of different specifications are interconnected in the foregoing SPN/MTN network, or a scenario in which at least one code block is sent to a decoder with a single input/output interface for decoding, or a scenario in which at least one photo of a fixed size is sent to a graphics processing unit for processing and then returned along a same path. Using an image recognition scenario at a subway gate as an example, a plurality of gates send facial photos to a single graphics processing unit for processing through an aggregation switch. The aggregation switch multiplexes the facial photos from the plurality of gates into one photo stream, and the network forwards the photo stream. The graphics processing unit demultiplexes the photo stream to restore the facial photos from the gates for image recognition.

It is assumed that the method is applied to the scenario in the foregoing SPN/MTN network. In this case, still referring to FIG. 1, in a FlexE multiplexing scenario, a FlexE multiplexing layer may be further included between a MAC layer and a FlexE shim. The FlexE multiplexing layer multiplexes a plurality of low-speed service code block streams into one high-speed service code block stream, and then the FlexE shim directly processes the high-speed service code block stream.

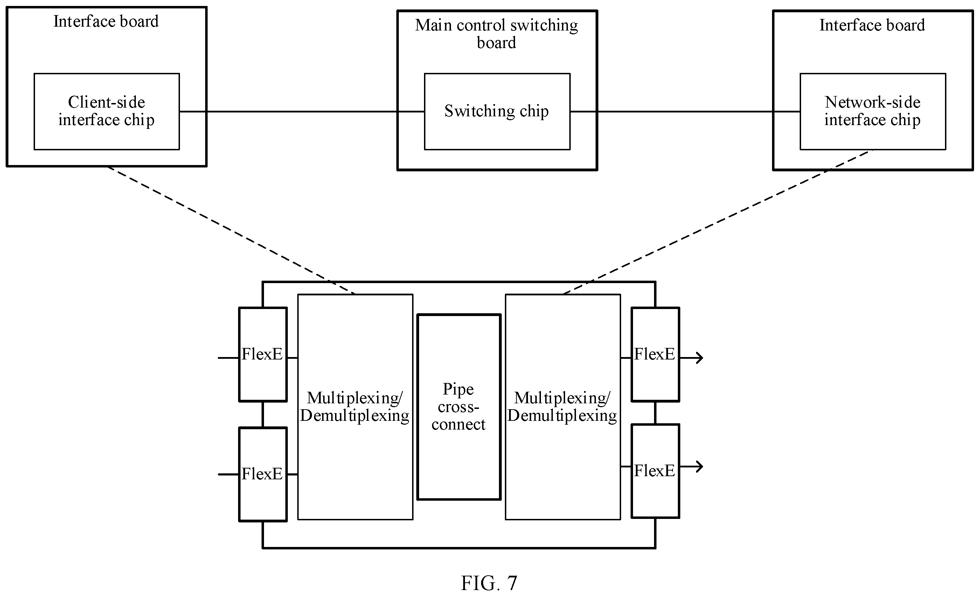

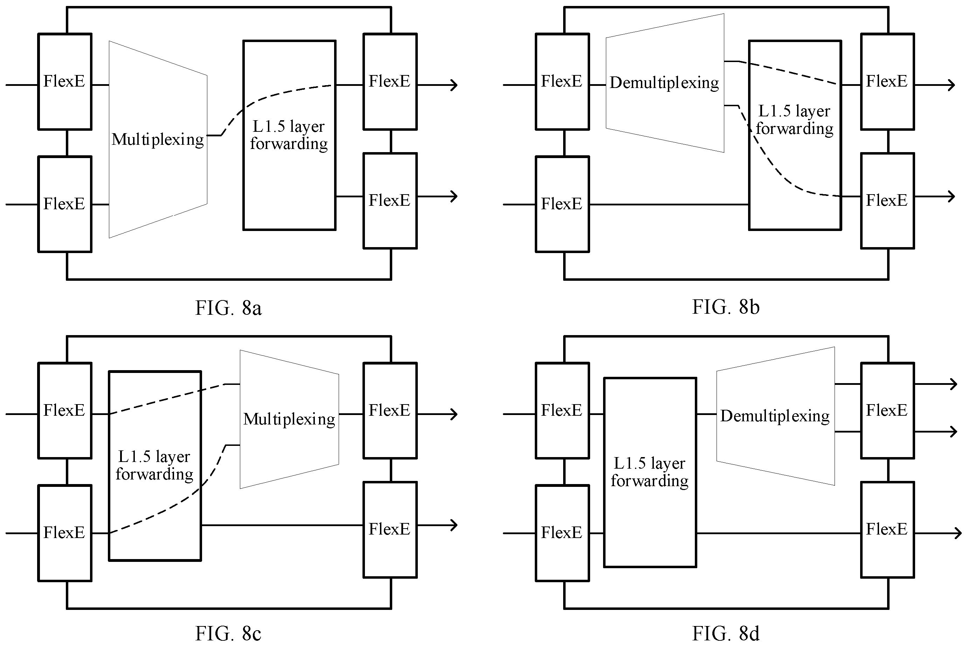

The code block processing method provided in embodiments of this application may be performed by a communication apparatus. The communication apparatus may be a network device such as a switch or a router, for example, a network device shown in FIG. 7 or FIG. 8a to FIG. 8d. Alternatively, the communication apparatus may be a part of components on the network device. The component may be a board or a line card on the network device, or may be a functional module on the network device, for example, an interface board or a main control switching board shown in FIG. 7, or a multiplexing module or a demultiplexing module shown in FIG. 8a to FIG. 8d. Alternatively, the communication apparatus may be a chip configured to implement the method in this application. This is not specifically limited in embodiments of this application. When the communication apparatus is a chip, a transceiver module configured to implement the method may be, for example, an interface circuit in the chip, and a processing module may be a processing circuit having a processing function in the chip. A connection manner between communication apparatuses includes but is not limited to direct connection via an Ethernet cable or an optical cable.

FIG. 7 is a diagram of a structure of a network device according to an embodiment of this application. The network device includes an interface board and a main control switching board, the interface board includes a client-side interface chip and a network-side interface chip, and the main control switching board includes a switch fabric chip. The interface board is configured to provide various service interfaces and implement data packet forwarding, and the main control switching board is configured to control and manage each component in the network device, so as to implement pipe cross-connect between different service interfaces. The network device shown in FIG. 7 may be configured to perform the data transmission method provided in embodiments of this application. The network device may be any node in FIG. 2 to FIG. 4, for example, an edge node or a backbone node. As shown in FIG. 7, the network device may be a box-type or chassis-type switch or router in an SPN/MTN network. A multiplexing/demultiplexing module may be deployed by upgrading or replacing the interface board. Specifically, the interface chip is upgraded by using software or a field-programmable gate array (field-programmable gate array, FPGA) logic is refreshed by using hardware, so as to support a multiplexing/demultiplexing function. The multiplexing module is configured to implement multiplexing, and the demultiplexing module is configured to implement demultiplexing.

Optionally, the multiplexing/demultiplexing module may be deployed at an ingress of the network device, or may be deployed at an egress of the network device, or may be deployed at both an ingress and an egress. The ingress may be an ingress port, and the egress may be an egress port. For example, as shown in FIG. 8a, the multiplexing module is deployed at the ingress of the network device. A plurality of FlexE modules on the ingress side obtain at least one low-speed service code block stream, aggregate the at least one service code block stream into one high-speed service code block stream through the multiplexing module, and then send the high-speed service code block stream to a channel cross-connect module for L1.5 layer forwarding. This manner of aggregation before cross-connect can reduce a quantity of channel cross-connect services in an L1.5 layer forwarding process, that is, reduce the scale of cross-connect operations, and reduce forwarding entries. As shown in FIG. 8b, the demultiplexing module is deployed at the ingress of the network device. A FlexE module on the ingress side obtains one high-speed service code block stream, and restores at least one low-speed service code block stream through the demultiplexing module. Further, the at least one low-speed service code block stream is separately cross-forwarded to different destination ports of the network device.

As shown in FIG. 8c, the multiplexing module is deployed at the egress of the network device. To be specific, after at least one low-speed service code block stream separately undergoes channel cross-connect and then sent to a same egress port, the at least one low-speed service code block stream is aggregated into one high-speed service code block stream for transmission through a high-bandwidth FlexE channel. As shown in FIG. 8d, the demultiplexing module is deployed at the egress of the network device. To be specific, a high-speed service code block stream first undergoes channel cross-connect and then arrives at a same egress port, and then each low-speed service code block stream is split from the high-speed service code block stream and separately transmitted through a low-bandwidth FlexE channel. In addition to the four deployment methods shown in FIG. 8a to FIG. 8d, a multiplexing unit or a demultiplexing unit may be deployed on both an ingress side and an egress side, or a multiplexing module is deployed on an ingress side or an egress side for some network devices in a network, and a demultiplexing module is deployed on an ingress side or an egress side for the other network devices.

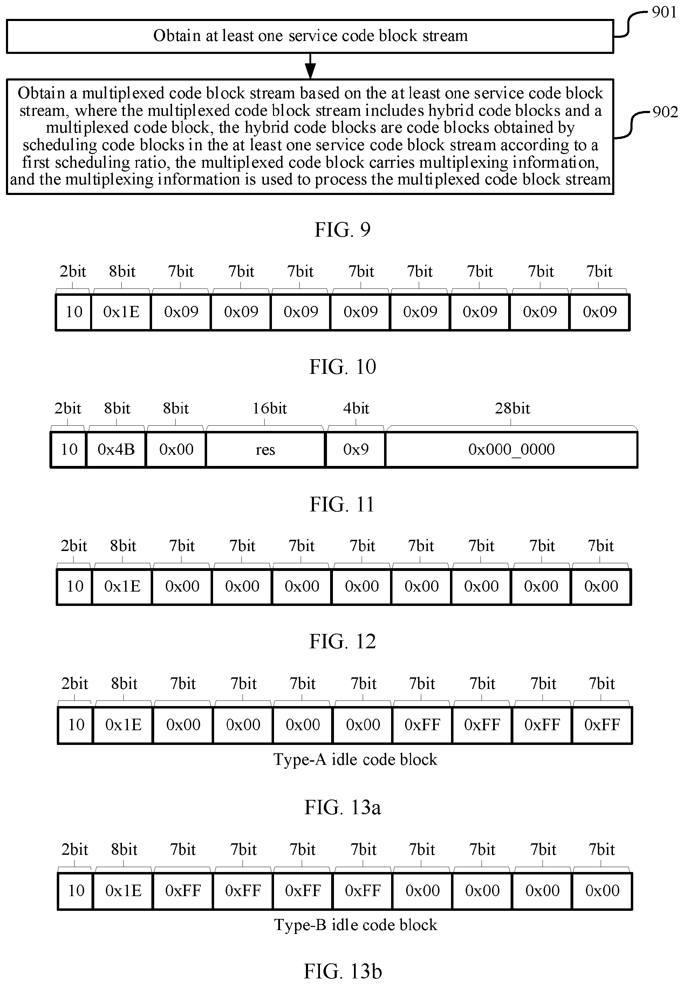

FIG. 9 is a flowchart of a data transmission method according to an embodiment of this application. An example in which a first communication apparatus performs the method is used for description. The first communication apparatus may be the network device shown in FIG. 7 or FIG. 8a to FIG. 8d. As shown in FIG. 9, the code block processing method includes but is not limited to the following step 901 and step 902.

Step 901: Obtain at least one service code block stream.

In embodiments of this application, any service code block stream in the at least one service code block stream includes a plurality of code blocks that are sequentially arranged, the code block is a data unit transmitted on a physical layer link of the Ethernet, and a code block encoding method includes but is not limited to a bit block encoding method of a fixed-length code block such as 8b/10b, 64b/66b, 256b/257b, or 512b/513b. Optionally, a manner of obtaining the at least one service code block stream may include: receiving the at least one service code block stream from at least one service through a plurality of channels or a single channel, or generating the at least one service code block stream for at least one service by using an upper-layer application.

In a possible implementation, a sum of transmission rates of the at least one service code block stream is less than or equal to a transmission rate of a transmission channel of the first communication apparatus. For example, the at least one service code block stream is three service code block streams. If the transmission channel of the first communication apparatus is a 20 Gbps slot, transmission rates respectively corresponding to the three service code block streams may be 5 Gbps, 10 Gbps, and 5 Gbps, or transmission rates respectively corresponding to the three service code block streams may be 5 Gbps, 5 Gbps, and 5 Gbps. If the transmission channel of the first communication apparatus is a 5 Gbps slot, transmission rates respectively corresponding to the three service code block streams are 2 Gbps, 1 Gbps, and 1 Gbps.

Step 902: Obtain a multiplexed code block stream based on the at least one service code block stream, where the multiplexed code block stream includes hybrid code blocks and a multiplexed code block, the hybrid code blocks are code blocks obtained by scheduling code blocks in the at least one service code block stream according to a first scheduling ratio, the multiplexed code block carries multiplexing information, and the multiplexing information is used to process the multiplexed code block stream.

In embodiments of this application, the first scheduling ratio may be determined based on a bandwidth or a transmission rate of the at least one service code block stream, so that the bandwidth or the transmission rate of the at least one service code block stream matches a frequency at which the at least one service code block stream is scheduled according to the first scheduling ratio. For example, if the transmission rates of the three service code block streams are respectively 5 Gbps, 10 Gbps, and 5 Gbps, the first scheduling ratio among the three service code block streams is 1:2:1. That the code blocks in the at least one service code block stream are scheduled according to the first scheduling ratio means that one code block in a first service code block stream, two code blocks in a second service code block stream, and one code block in a third service code block stream are separately scheduled, and this scheduling process is repeated. Because a sequence of scheduled code blocks determines a multiplexing mode between the at least one service code block stream, if the first scheduling ratio is fixed, the multiplexing mode between the at least one service code block stream in the multiplexed code block stream is fixed. For example, if the first scheduling ratio is 1:2:1, the multiplexing mode is 1:2:1.

In a process of scheduling the code blocks in the at least one service code block stream according to the first scheduling ratio, if a first quantity of code blocks included in a first service code block stream is less than a second quantity of code blocks scheduled in the first service code block stream, a third quantity of placeholder code blocks are inserted, where the first service code block stream is a code block stream in the at least one service code block stream, and the third quantity is a difference between the second quantity and the first quantity. It should be noted that the code blocks included in the first service code block stream do not include scheduled code blocks. In other words, the first quantity is a quantity of remaining code blocks included in the first service code block stream, or the first quantity is a quantity of code blocks currently included in the first service code block stream. The remaining code blocks included in the first service code block stream or the code blocks currently included in the first service code block stream may be code blocks in the first service code block stream other than the scheduled code blocks, that is, unscheduled code blocks. For example, the first service code block stream includes 10 code blocks, in which three code blocks have been scheduled, and there are seven code blocks remaining. In this case, the first quantity is 7. If the second quantity is 8, the third quantity is 1, and one placeholder code block is inserted.

In this way, when a quantity of code blocks in any service code block stream does not meet a quantity of to-be-scheduled code blocks in the first scheduling ratio, it can be ensured, by inserting a placeholder code block, that the first scheduling ratio between the at least one service code block stream is fixed, thereby ensuring that code block processing performed according to the first scheduling ratio is accurate. For example, the service code block stream is accurately decomposed according to the first scheduling ratio in a demultiplexing process.

For example, in a process of scheduling the code blocks in the three service code block streams according to 1:2:1, if the first service code block stream includes one code block, the one code block in the first service code block stream is scheduled; if the second service code block stream includes one code block, the one code block in the second service code block stream is scheduled, and one placeholder code block is inserted, where the placeholder code block is used to replace one code block in the second service code block stream; and if the third service code block stream includes one code block, the one code block in the third service code block stream is scheduled; and continuing, if the first service code block stream includes one code block, the one code block in the first service code block stream is scheduled; if the second service code block stream includes two code blocks, the two code blocks in the second service code block stream are scheduled; and if the third service code block stream does not include any code block, one placeholder code block is inserted, where the placeholder code block is used to replace one code block in the third service code block stream. The code blocks in the at least one service code block stream are continuously scheduled in the scheduling manner.

In a possible implementation, the code blocks in the at least one service code block stream are separately placed into at least one code block queue, and that the code blocks in the at least one service code block stream are scheduled according to the first scheduling ratio means that the code blocks are scheduled from the at least one code block queue according to the first scheduling ratio. In a process of scheduling the code blocks in the at least one code block queue according to the first scheduling ratio, when a code block in any code block queue is to be scheduled, if the any code block queue includes no code block, a placeholder code block is inserted.

Optionally, a code block type of the placeholder code block is the same as a code block type in the service code block stream. In embodiments of this application, the 64b/66b bit block encoding method is used as an example for description. That is, all code blocks in embodiments of this application are 64b/66b bit blocks. In the 64b/66b bit block, the first 2 bits are synchronization header (synchronization header, SH) bits, and the last 64 bits are payload bits, which may be used to carry payload data.

A synchronization header of "01" indicates that the last 64 bits are all data, that is, the last 64 bits are eight 8-bit data bytes. A synchronization header of "10" indicates that the last 64 bits are a mixture of data and control information, where 8 bits immediately following the synchronization header are a type field, 56 bits following the type field are a payload (payload) field, and the payload field is a mixture of control information and data. For example, when a field value of the type field is 0x1E, the 56 bits include eight 7-bit control bytes, and each control byte is used to carry one piece of control information; or when a field value of the type field is 0x4B, the 56 bits include three 8-bit data bytes, a 4-bit order (order, O) byte, and four 7-bit control bytes, where each data byte is used to carry data information, and each control byte is used to carry control information.

A format of the placeholder code block is not limited in embodiments of this application, provided that the placeholder code block can be distinguished from an existing control code block. For example, a diagram of the format of the placeholder code block may be shown in FIG. 10. The synchronization header is "10", and the 8-bit type field is 0x1E, indicating that the type of the placeholder code block is a control (control, C) code block, and values of the eight 7-bit control bytes are all 0x09. Therefore, by defining the values of 0x1E and eight 0x09, uniqueness of the C code block can be ensured, that is, uniqueness of the placeholder code block can be ensured.

Alternatively, a diagram of the format of the placeholder code block may be shown in FIG. 11. The synchronization header is "10", and the 8-bit type field is 0x4B, indicating that the type of the placeholder code block is an O code block, and 0x9 is a newly defined value of O code (code). Therefore, by defining the two values 0x4B and 0x9, uniqueness of the O code block can be ensured, that is, uniqueness of the placeholder code block can be ensured. Optionally, in the three 8-bit data bytes, a value of the first data byte, that is, bits 11 to 18, is 0x00, and the last two data bytes are used as a reserved (reserve, res) field to carry other data information when needed later; and values of the last four 7-bit control bytes, that is, the last 28 bits, are 0x000_0000.

After the code blocks are scheduled in the foregoing scheduling manner, the hybrid code blocks may be obtained based on the scheduled code blocks. Optionally, a manner of obtaining the hybrid code blocks based on the scheduled code blocks includes but is not limited to the following several manners.

Manner 1: The scheduled code blocks are directly used as the hybrid code blocks.

In Manner 1, the code blocks scheduled from the at least one service code block stream are directly used as the hybrid code blocks. For example, the scheduled code blocks are sequentially transmitted, and the sequentially transmitted code blocks are used as the hybrid code blocks. The hybrid code blocks include service code blocks sorted according to the first scheduling ratio, or the hybrid code blocks include service code blocks sorted according to the first scheduling ratio and a placeholder code block. This manner is easy to operate and implement. For example, according to the foregoing scheduling process, the scheduled code blocks are respectively a code block 11 in the first service code block stream, a code block 21 and a placeholder code block in the second service code block stream, a code block 31 in the third service code block stream, a code block 12 in the first service code block stream, a code block 22 and a code block 23 in the second service code block stream, and a placeholder code block in the third service code block stream. In this case, the hybrid code blocks include the code block 11, the code block 21, the placeholder code block, the code block 31, the code block 12, the code block 22, the code block 23, and the placeholder code block.

Manner 2: Idle code blocks are inserted into the scheduled code blocks based on a frequency offset, where the frequency offset is a frequency offset existing between nodes configured to transmit the multiplexed code block stream.

The node is any network device in a transmission network, for example, the edge node or the backbone node shown in FIG. 2 to FIG. 4. The first communication apparatus is a node in the network. A specific frequency offset is allowed between Ethernet nodes, and the frequency offset may be referred to as a frequency offset for short. For example, a maximum frequency offset allowed by a 50 GE/100 GE/200 GE/400 GE Ethernet interface is ±100 parts per million (part per million, ppm). Therefore, the code block stream needs to have a specific scaling capability, that is, can support addition or deletion of a small quantity of idle (idle) code blocks, to adapt to a bandwidth offset between nodes caused by the frequency offset. The foregoing requirement for deleting and/or adding idle code blocks caused by the frequency difference between nodes is referred to as a frequency offset adjustment requirement for short. In other words, due to the frequency offset adjustment requirement, the node needs to delete and/or add idle code blocks. Therefore, the idle code blocks are inserted into the concatenated code block stream, so that the hybrid code blocks can support addition or deletion of the idle code blocks, that is, the hybrid code blocks can support frequency offset adjustment, thereby meeting the frequency offset adjustment requirement between nodes.

For example, when a sending rate of a transmitting end is higher than a sending rate of a receiving end, a data write rate into a buffer of the receiving end is higher than a read rate, which leads to buffer overflow over time. Therefore, the receiving end needs to delete idle code blocks to avoid buffer overflow at the receiving end. When the sending rate of the transmitting end is lower than the sending rate of the receiving end, the write rate into the buffer of the receiving end is lower than the read rate, which leads to buffer underflow over time. Therefore, the receiving end needs to add idle code blocks to avoid buffer underflow at the receiving end.

In a possible implementation, the idle code blocks are inserted into the scheduled code blocks based on the frequency offset, to obtain the hybrid code blocks. A manner of inserting the idle code into the sequentially transmitted code block stream based on the frequency offset may include: determining an insertion period based on the frequency offset; and inserting the idle code into the scheduled code block stream based on the insertion period. Therefore, in addition to the service code blocks sorted according to the first scheduling ratio and/or the placeholder code block, the hybrid code blocks further include the idle code blocks inserted based on the frequency offset. Optionally, the inserting the idle code blocks into the scheduled code blocks based on the frequency offset may include: sequentially transmitting the scheduled code blocks to obtain sequentially transmitted code blocks, and inserting the idle code blocks into the sequentially transmitted code blocks.

The determining the insertion period based on the frequency offset is determining the insertion period based on the frequency offset adjustment requirement between nodes. In other words, a quantity of idle code blocks inserted into the hybrid code blocks needs to be sufficient for frequency offset adjustment. An excessively large quantity of idle code blocks causes a waste of bandwidth, while an excessively small quantity idle code blocks causes a failure of frequency offset adjustment. For example, when the frequency offset between nodes is ±100 ppm, the insertion period of idle code blocks may be 200/1000000=1/5000, and idle code is inserted based on the insertion period. In other words, i idle code blocks may be inserted every 4999*i code blocks, where i=1, 2, 3, and other positive integers. Optionally, a position at which the idle code block is inserted is not limited in embodiments of this application. For example, the position at which the idle code block is inserted needs to be after a T code block.

In a possible implementation, a manner of obtaining the at least one service code block stream may include: receiving a code block stream transmitted on at least one channel, where the code block stream transmitted on the at least one channel includes a first code block stream; and deleting all idle code blocks from the first code block stream, to obtain the first service code block stream, where the first service code block stream is a code block stream in the at least one service code block stream. In this way, all idle code blocks are deleted from each code block stream transmitted on the at least one channel, to obtain the at least one service code block stream. Due to the foregoing frequency offset adjustment requirement, the received code block stream transmitted on the at least one channel may be a code block stream into which idle code blocks have been inserted. However, to ensure that a multiplexing mode between code block streams transmitted on the at least one channel is fixed, the idle code blocks in the code block stream transmitted on the at least one channel cannot be used for frequency offset adjustment. This is because an error occurs in the multiplexing mode once idle code blocks are deleted or added, which causes a demultiplexing error.

Therefore, in embodiments of this application, all the idle code blocks in the originally received code block stream transmitted on the at least one channel are deleted, and then idle code blocks are inserted based on the frequency offset adjustment requirement. This can ensure that the multiplexing mode is fixed, and can meet the frequency offset adjustment requirement. Because idle code blocks inserted based on the frequency offset may occupy a bandwidth saved by deleting idle code blocks, introduction of additional bandwidth overheads can be further avoided. That is, overheads required for inserting idle code blocks into the multiplexed code block stream are squeezed out by deleting idle code blocks from the service code block stream, eliminating the need for additional overheads for inserting idle code blocks. Optionally, in embodiments of this application, some idle code blocks may alternatively be deleted from the first code block stream. When some idle code blocks are deleted, undeleted idle code blocks in the first code block stream may be further concealed, to prevent the undeleted idle code blocks from being deleted by mistake in a transmission process due to the frequency offset adjustment requirement. For a manner of concealing the idle code blocks, refer to the following manner of concealing control code blocks. Details are not described herein.

In embodiments of this application, the idle code block is also referred to as an I code block. The idle code block deleted from the code block stream transmitted on the at least one channel is an idle code block defined in an Ethernet standard. A diagram of a format of the idle code block defined in the Ethernet standard is shown in FIG. 12. The synchronization header is "10", and the 8-bit type field is 0x1E, indicating that the type of the placeholder code block is a C code block, and values of the eight 7-bit control bytes are all 0x00, or the eight 7-bit control bytes may all be null. Optionally, the idle code block inserted into the concatenated code block stream based on the frequency offset may also be an idle code block defined in the Ethernet standard shown in FIG. 12, so that a manner of inserting the idle code block is simple and has good compatibility.

However, once an error occurs in the idle code block inserted in the multiplexing process, the multiplexing mode is disrupted. As a result, the receiving end cannot correctly demultiplex the at least one service code block stream. Therefore, in embodiments of this application, the idle code block inserted in the multiplexing process may alternatively be a custom-defined idle code block. The custom-defined idle code block has a more reliable encapsulation format, to reduce a risk of an error in the idle code block. Optionally, there are at least two idle code blocks, and a Hamming distance between the at least two idle code blocks meets a distance requirement. The distance requirement may be flexibly adjusted based on an application scenario. For example, the distance requirement is a maximum value. In this case, inserting idle code blocks into the concatenated code block stream each time based on the frequency offset is inserting at least two idle code blocks consecutively. The Hamming distance is a quantity of bit positions at which corresponding bits differ between bit streams of a same length.

For example, refer to diagrams of formats of idle code blocks shown in FIG. 13a and FIG. 13b. Two types of idle code blocks are defined, that is, a type-A idle code block and a type-B idle code block. Both types of idle code blocks have a synchronization header of "10" and an 8-bit type field of 0x4B. For the type-A idle code block, the first half of a 56-bit payload field is set to all zeros, and the second half is set to all ones; and for the type-B idle code block, the first half of a 56-bit payload field is set to all ones, and the second half is set to all zeros. That is, the values in the payload fields of the two types of idle code blocks are exactly opposite, resulting in a maximum Hamming distance between the two types of idle code blocks. Optionally, when there is one idle code block, the idle code block may be the type-A idle code block or the type-B idle code block shown in FIG. 13a and FIG. 13b. When there are two idle code blocks, the idle code blocks may be the type-A idle code block and the type-B idle code block shown in FIG. 13a and FIG. 13b.

When there are two idle code blocks, the inserting the idle code block into the concatenated code block stream each time based on the frequency offset is consecutively inserting two idle code blocks (one is the type-A idle code block, and the other is the type-B idle code block). In a forwarding process of the multiplexed code block stream, two idle code blocks are added or deleted. In addition, in a demultiplexing process, two idle code blocks are deleted. Therefore, even if some bits in one of the two idle code blocks are corrupted, the two types of idle code blocks can still be distinguished, thereby improving reliability of the idle code block, reducing a risk of a demultiplexing failure caused by the corrupted idle code block, and improving reliability of a multiplexing system.

Manner 3: The hybrid code blocks include a concealed code block, and the concealed code block is obtained by concealing a control code block in the at least one service code block stream.

In embodiments of this application, before the at least one service code block stream is scheduled, the control code block in the at least one service code block stream may be concealed; or after the at least one service code block stream is scheduled, the control code block in the at least one service code block stream may be concealed. If the control code block is concealed after the at least one service code block stream is scheduled, the control code block in the scheduled code blocks is concealed.

The control code block includes but is not limited to a C code block, an O code block, and the like. The C code block may be a 66-bit code block whose type field value is 0x1E, and the O code block may be a 66-bit code block whose type field value is 0x4B. If the control code block in the at least one service code block stream is not concealed, insufficient protection may be caused for the at least one service code block stream. For example, the control code block in the at least one service code block stream may be subjected to misoperation by a node on a multiplexed transmission channel. Therefore, in embodiments of this application, the control code block in the scheduled at least one service code block stream is concealed, which enhances protection for the control code block in the original at least one service code block stream, making the concealed control code block invisible to a node on the transmission channel that transmits the multiplexed code block stream.

Optionally, a manner of concealing the control block is not limited in embodiments of this application, provided that a concealed control block can be prevented from being processed by a forwarding node on the transmission channel, and can be restored to the original control block in a demultiplexing process. For example, all control code blocks in the scheduled code blocks are transcoded into corresponding concealed code blocks. Using an example in which the control code blocks include a C code block and an O code block, a transcoding rule may include: modifying a value of a type field in the C code block from 0x1E to 0x00; and modifying a value of O code in the O code block from 0x0 to 0x3, modifying a value of O code from 0x5 to 0x6, and modifying a value of O code from 0xC to 0xA. Alternatively, the transcoding rule may include: modifying a value of the first 2 bits of the control block, that is, the synchronization header, to 00 or 11.

For the foregoing case in which the at least one service code block stream is obtained after all the code blocks in the received code block stream transmitted on the least one channel are deleted, if only some idle code blocks instead of all idle code blocks are deleted, or if no idle blocks are deleted and the received code block stream transmitted on the at least one channel is directly used as the at least one service code block stream, the idle code blocks in the at least one service code block stream may be concealed by concealing the control code block. For example, the value of the first 2 bits of the idle code block, that is, the synchronization header, is modified to 00 or 11. This prevents the idle code blocks in the at least one service code block stream from being deleted by the intermediate forwarding node due to the frequency offset adjustment requirement after being multiplexed into the multiplexed code block stream, thereby preventing the first scheduling ratio from being disrupted because the idle code blocks in the at least one service code block stream are deleted, and improving a success rate of demultiplexing the at least one service code block stream according to the first scheduling ratio.

For a manner of obtaining the hybrid code blocks based on code blocks after the control code block is concealed, refer to Manner 2. To be specific, the code blocks after the control code block is concealed are directly used as the hybrid code blocks; or idle code blocks are inserted into the code blocks after the control code block is concealed based on the frequency offset. Details are not described herein again. In Manner 3, the hybrid code blocks may include a service code block, a placeholder code block, a concealed code block, and an idle code block.

Therefore, the hybrid code blocks can be obtained according to the first scheduling ratio by using the foregoing scheduling process. In embodiments of this application, after the hybrid code blocks are obtained by using the foregoing scheduling process, the multiplexed code block stream is further obtained by inserting the multiplexed code block. That is, the multiplexed code block stream includes the hybrid code blocks and the multiplexed code block, the multiplexed code block carries the multiplexing information, and the multiplexing information is used to process the multiplexed code block stream.

Optionally, the multiplexing information includes at least one of the first service identifier or scheduling information of the multiplexed code block stream, and the scheduling information includes at least one of the first scheduling ratio or a second service identifier corresponding to the at least one service code block stream. The first service identifier included in the multiplexing information can be used to forward the multiplexed code block stream, and the scheduling information included in the multiplexing information can be used to demultiplex the multiplexed code block stream. In this way, the multiplexed code block stream can be correctly forwarded and correctly demultiplexed by inserting the multiplexed code block and carrying the multiplexing information.

In embodiments of this application, two implementations of the multiplexed code block are provided. In one implementation, the multiplexed code block is an overhead (overhead, OH) code block defined in a FlexE standard, and in the other implementation, the multiplexed code block is a multiplexing indicator code block. The multiplexing indicator code block is a custom-defined code block in embodiments of this application, and can be used to carry the multiplexing information. The multiplexing indicator code block may also be referred to as a multiplexed code block, an indicator code block, a custom-defined code block, or the like. Depending on whether the multiplexed code block is the OH code block or the multiplexing indicator code block, a manner of inserting the multiplexed code block and an obtained multiplexed code block stream vary.

Case 1: The multiplexed code block is a first overhead code block, the multiplexing information is carried in a reserved field of the first overhead code block, and the first overhead code block is used to extract the hybrid code blocks from the multiplexed code block stream.

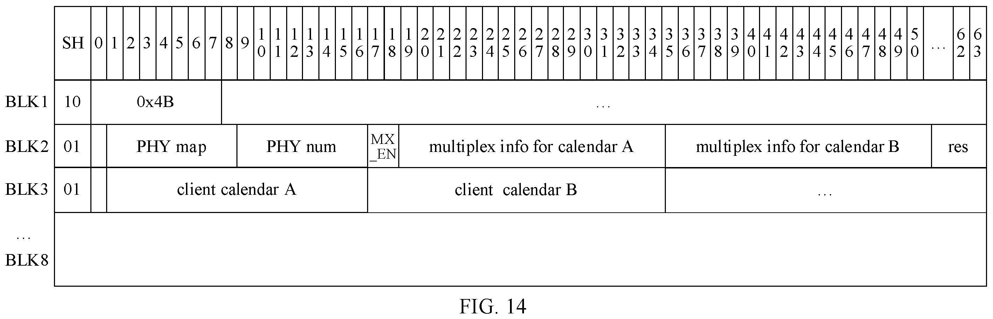

In Case 1, a reserved field of the OH code block in the FlexE standard is extended to carry the multiplexing information, that is, the first overhead code block is the OH code block in the FlexE standard. For example, the multiplexing information includes the first service identifier of the multiplexed code block stream and the scheduling information. Refer to a diagram of a format of a first overhead code block shown in FIG. 14. The first overhead code block includes eight 66-bit code blocks, namely, BLK1 to BLK8 in FIG. 14. A synchronization header of BLK1 is "10", and a type field of BLK1 is 0x4B. Synchronization headers of BLK2 and BLK3 are both "01", and BLK2 includes a PHY map (map) field, a PHY number (number, num) field, and a reserved field. The reserved field is the res field shown in FIG. 14.

In embodiments of this application, BLK2 is extended (as shown in a dashed box in FIG. 14), where bits 17 and 18 in a 64-bit payload field corresponding to BLK2 are defined as a multiplex enable (multiplex enable, MX_EN) field. If a value of the MX_EN field is "00", that is, a current default value, it indicates that a multiplexing field following the MX_EN field does not need to be checked. If the value of the MX_EN field is "11", it indicates that the multiplexing field following the MX_EN field needs to be checked. The multiplexing field is a field of bits 19 to 50. Bits 19 to 34 are defined as a multiplex info for calendar A field, which represents scheduling information of a multiplexed code block stream formed in calendar A after multiplexing. Optionally, bits 35 to 50 are defined as multiplex info for calendar B, which represents scheduling information of a multiplexed code block stream formed in calendar B after multiplexing.

Herein, calendar A and calendar B represent two different slot groups, and definitions of multiplex info for calendar A and multiplex info for calendar B enable the method to support FlexE's native configuration switching capability. BLK3 includes a client calendar A field and a client calendar B field. In embodiments of this application, the client calendar A field is used to carry a first service identifier of the multiplexed code block stream formed in calendar A after multiplexing, and the client calendar B field is used to carry a first service identifier of the multiplexed code block stream formed in calendar B after multiplexing.

In the FlexE standard, a transmission bandwidth occupied by the OH code block is used to transmit a reserved bandwidth of FlexE control information. In other words, an objective of the OH code block is to reserve sufficient space in an Ethernet frame for transmitting the FlexE control information and synchronization information, thereby ensuring compatibility with a frame format. In this way, FlexE can also work normally and transmit control information in the Ethernet frame. Because the OH code block is automatically inserted and identified by FlexE hardware, for example, automatically inserted and identified by the FlexE shim layer shown in FIG. 1, users do not need to manually perform any configuration or programming. For one or more physical link interfaces PHY included in one FlexE group, an OH code block is periodically inserted into data on each PHY, to implement slot location positioning inside a PHY and alignment between different PHYs. A period of inserting an OH code block may be flexibly adjusted based on an application scenario. For example, one OH code block may be inserted into each PHY every 1023*20 66-bit payload data code blocks.

In Case 1, because the multiplexed code block is the OH code block, the operation of inserting the multiplexed code block is an operation of inserting the OH code block. For the operation of inserting the OH code block, refer to related descriptions in the FlexE standard. Details are not described herein. In this way, the OH code block is extended to carry the multiplexing information, thereby avoiding extra overheads caused by carrying the multiplexing information, implementing maximum coupling with the FlexE protocol, and reducing implementation complexity of carrying the multiplexing information.

However, in the FlexE standard, an OH code block is terminated hop by hop. To be specific, an ingress port strips an OH code block from a received code block stream, and an egress port regenerates and inserts an OH code block into a sent code block stream. Therefore, the multiplexing information needs to be copied from the ingress port to the egress port on each forwarding node, which introduces operational complexity. Therefore, in embodiments of this application, the OH code block in the FlexE standard may alternatively not be used to carry the multiplexing information, but a dedicated multiplexed code block is newly defined to carry the multiplexing information. For this, refer to related descriptions in Case 2.

Case 2: The multiplexed code block is a multiplexing indicator code block, the multiplexing information is carried in a specified field of the multiplexing indicator code block, the multiplexed code block stream further includes a second overhead code block, and the second overhead code block is used to extract the multiplexing indicator code block and the hybrid code blocks from the multiplexed code block stream.

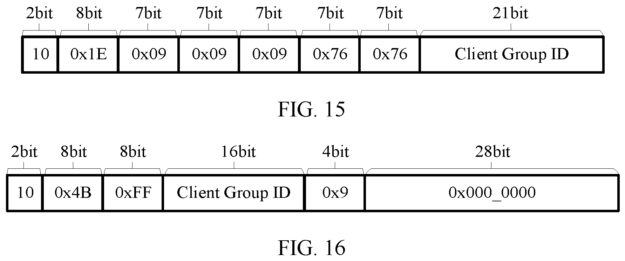

The multiplexing indicator code block is not limited in embodiments of this application, provided that the multiplexing indicator code block can be distinguished from an existing code block, and the multiplexing information can be carried in a specified field. For example, the multiplexing information includes a first service identifier of the multiplexed code block stream. A diagram of a format of the multiplexing indicator code block may be shown in FIG. 15 or FIG. 16. In FIG. 15, the multiplexed code block is defined as a unique C code block, where a value of a type field of bits 3 to 10 is 0x1E, values of the three immediately following 7-bit control bytes are all 0x09, and values of the following two 7-bit control bytes are both 0x76, so that the multiplexed code block shown in FIG. 15 can be distinguished from the placeholder code block shown in FIG. 10; and the last 21 bits, that is, the specified field, are defined as Client Group ID, which indicates the first service identifier of the multiplexed code block stream after multiplexing. Alternatively, the last 21 bits may be used to carry scheduling information of the multiplexed code block stream. For example, two multiplexing indicator code blocks are inserted, where one multiplexing indicator code block is used to carry the first service identifier of the multiplexed code block stream, and the other multiplexing indicator code block is used to carry the scheduling information of the multiplexed code block stream.

In FIG. 16, the multiplexed code block is defined as a unique O code block, where a value of a type field of bits 3 to 10 is 0x4B, and a value of O code of bits 35 to 38 is 0x9. Optionally, in three 8-bit data bytes, a value of the first data byte, that is, bits 11 to 18, is 0xFF, so that the multiplexed code block shown in FIG. 16 can be distinguished from the placeholder code block shown in FIG. 11; bits 19 to 34 bits of the following two data bytes, that is, the specified field, are defined as Client Group ID, which indicates the first service identifier of the multiplexed code block stream after multiplexing; and values of the last four 7-bit control bytes, that is, the last 28 bits, are 0x000_0000. Optionally, the last 28 bits may be used to carry scheduling information of the multiplexed code block stream.

Optionally, a manner of inserting the multiplexing indicator code block is not limited in embodiments of this application, provided that the inserted multiplexing indicator code block can be used to delimit the hybrid code blocks, or can be used as a reference point of the first scheduling ratio. For example, as shown in FIG. 1, before the FlexE shim layer is reached, the FlexE multiplexing layer inserts a multiplexing indicator code block every N scheduling periods of the first scheduling ratio. N is any positive integer, and a location of inserting a multiplexing indicator code block is at the beginning of a scheduling period. Therefore, the insertion position of the multiplexing indicator code block may be used as a reference point to start performing demultiplexing according to the first scheduling ratio. For example, if the first scheduling ratio is 1:2:1, the scheduling period is (a service code block 1; a service code block 2, a service code block 2; a service code block 3), and the insertion position of the multiplexing indicator code block is a code block before the service code block 1.

Therefore, regardless of whether the multiplexed code block is the multiplexing indicator code block or the OH code block, the multiplexed code block can be used for delimitation during forwarding or demultiplexing. The delimitation refers to determining a boundary between code block streams transmitted on different transmission channels in code block streams received through any Ethernet interface, to extract the code block streams transmitted on the different transmission channels. For example, a 100 GE Ethernet interface includes five 20 Gbps channels, and the multiplexed code block stream in embodiments of this application is transmitted on a first 25 Gbps channel. In this case, the first overhead code block can be used to delimit a hybrid code block transmitted on the first 25 Gbps channel in the code block stream received through the 100 GE Ethernet interface; the second overhead code block can be used to delimit a hybrid code block and a multiplexing indicator code block transmitted on the first 25 Gbps channel in the code block stream received through the 100 GE Ethernet interface, and the multiplexing indicator code block can be further used to delimit the hybrid code block.

In Case 2, after the multiplexing indicator code block is used as the multiplexed code block, dependency on the FlexE protocol is reduced, and clearer decoupling between functional modules is implemented, thereby facilitating modular implementation. The intermediate forwarding node does not need to strip the multiplexing information at the ingress or insert the multiplexing information at the egress. That is, the multiplexing information does not need to be copied from the ingress to the egress. The multiplexing indicator code block is forwarded together with the multiplexed code block stream as a part of the multiplexed code block stream, and directly passes through the forwarding node, thereby reducing processing complexity of the forwarding node. The forwarding node does not modify the multiplexing indicator code block, but only reads the multiplexing information carried in the multiplexing indicator code block, to look up a routing table based on the first service identifier in the multiplexing information for forwarding. Optionally, the routing table includes a correspondence between a first service identifier and an egress port, and the first service identifier is a multiplexed service identifier.

Therefore, the multiplexing on the at least one service code block stream is implemented by using the foregoing step 901 to step 903. After the multiplexed code block stream is obtained, an egress port may be determined based on the first service identifier of the multiplexed code block stream, and the multiplexed code block stream is sent through the egress port. For example, the multiplexed code block stream is sent to a second communication apparatus through the egress port. A transmission rate of the multiplexed code block stream is greater than a transmission rate of the at least one service code block stream. For example, transmission rates of the at least one service code block stream transmitted through a low-bandwidth channel are respectively 5 Gbps, 10 Gbps, and 5 Gbps, and a transmission rate of the multiplexed code block stream transmitted through a high-bandwidth channel is 20 Gbps, so that the transmission rate of the at least one service code block stream is increased to 20 Gbps. The at least one service code block stream is multiplexed into one multiplexed code block stream for transmission, so that the transmission rate of the at least one service code block stream is increased, thereby effectively using a large bandwidth of the egress port, and avoiding a bandwidth waste. In other words, at least one low-speed service code block stream is aggregated into one high-speed service code block stream, thereby resolving a problem of interconnection between channels with different specifications.

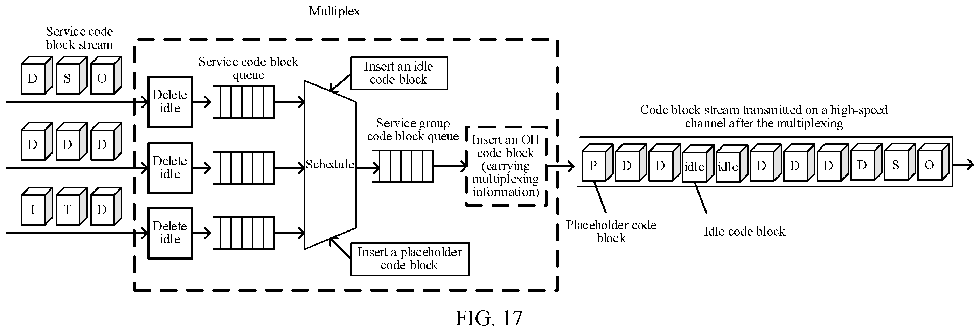

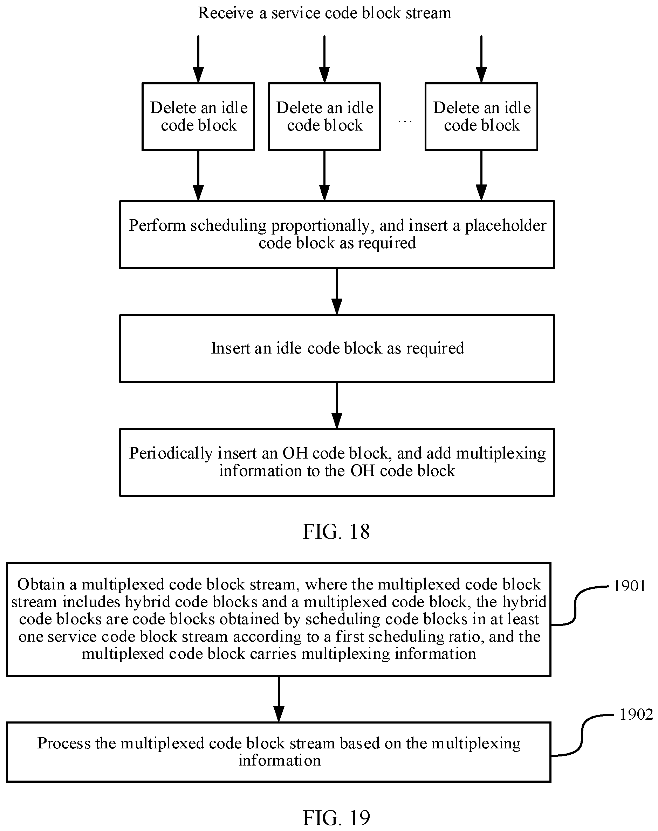

Using an example in which the first scheduling ratio is a fixed ratio and the multiplexed code block is an overhead code block, the following describes a multiplexing process in the code block processing method provided in embodiments of this application by using an example with reference to a system block diagram shown in FIG. 17 and a flowchart shown in FIG. 18. The multiplexing process includes but is not limited to the following step 11 to step 14.

Step 11: Receive at least one service code block stream, and delete all idle code blocks from each service code block stream.

The at least one service code block stream shown in FIG. 17 includes three service code block streams, where a first service code block stream includes an O code block, an S code block, and a D code block, a second service code block stream includes three D code blocks, and a third service code block stream includes a D code block, a T code block, and an I code block. For each service code block stream, after a code block is received, if the code block is an idle code block, the code block is deleted; or if the code block is not an idle code block, the code block is placed into a service code block queue.

Step 12: Schedule code blocks in the at least one service code block stream according to a fixed ratio, and insert a placeholder code block as required.

As shown in FIG. 17, the scheduling the code blocks in the at least one service code block stream is scheduling code blocks in a plurality of service code block queues. The inserting the placeholder code block as required is inserting a specific placeholder code block provided in embodiments of this application if a service code block stream includes no code block temporarily when the service code block stream is to be scheduled.

Step 13: Insert idle code blocks as required to form hybrid code blocks.

The inserting the idle code blocks as required is determining an insertion period based on a frequency offset adjustment requirement, and inserting idle code blocks into the scheduled code blocks based on the insertion period; and placing the obtained hybrid code blocks into the service group code block queue.

Step 14: Periodically insert an OH code block, and add multiplexing information to the overhead code block, to form a multiplexed code block stream.

For a code block in the service group code block queue, the OH code block is periodically inserted to obtain the multiplexed code block stream, and then transmit the multiplexed code block stream through a high-speed channel. In step 11, a channel through which the at least one service code block stream is received is a low-speed channel. A code block stream transmitted on a high-speed channel after multiplexing, that is, the multiplexed code block stream, is shown in FIG. 17, and may include a placeholder code block and an idle code block.

For implementations of step 11 to step 14, refer to the implementations of step 901 and step 902. Details are not described herein again.

In conclusion, in the code block processing method shown in FIG. 9, the code blocks in the at least one service code block stream are scheduled according to the fixed scheduling ratio, to obtain the multiplexed code block stream based on the scheduled code blocks, so as to multiplex the at least one service code block stream into one multiplexed code block stream. A framing operation is not required in this multiplexing process, thereby avoiding a bandwidth waste caused by the framing operation. In addition, multiplexing is directly performed at a granularity of a code block, which reduces complexity of the multiplexing process and improves multiplexing efficiency compared with multiplexing at a granularity of a bit. In addition, the multiplexed code block stream carries the multiplexing information, so that all nodes that receive the multiplexed code block stream can process the multiplexed code block stream based on the multiplexing information, thereby ensuring correct processing of the multiplexed code block stream.

FIG. 19 is a flowchart of a data transmission method according to an embodiment of this application. An example in which a second communication apparatus performs the method is used for description. The second communication apparatus may be the network device shown in FIG. 7 or FIG. 8a to FIG. 8d. The second communication apparatus and a first communication apparatus may be a same network device, or may be two network devices connected to each other. As shown in FIG. 19, the code block processing method includes but is not limited to the following step 1901 and step 1902.

Step 1901: Obtain a multiplexed code block stream, where the multiplexed code block stream includes hybrid code blocks and a multiplexed code block, the hybrid code blocks are code blocks obtained by scheduling code blocks in at least one service code block stream according to a first scheduling ratio, and the multiplexed code block carries multiplexing information.

Optionally, a manner of obtaining the multiplexed code block stream may be: receiving the multiplexed code block stream sent by the first communication apparatus, or performing multiplexing in the manner of step 901 to step 903, to obtain the multiplexed code block stream. For related content of the multiplexed code block stream, refer to the content of the multiplexed code block stream in step 901 to step 903. Details are not described herein again.

Step 1902: Process the multiplexed code block stream based on the multiplexing information.

In embodiments of this application, the processing the multiplexed code block stream based on the multiplexing information includes two parts: forwarding the multiplexed code block stream, and demultiplexing the multiplexed code block stream. The second communication apparatus can both forward and demultiplex the multiplexed code block stream. Alternatively, the second communication apparatus forwards the multiplexed code block stream, a third network device receives the multiplexed code block stream forwarded by the second communication apparatus, and the third network device demultiplexes the multiplexed code block stream.

Processing manner 1: Forward the multiplexed code block stream based on the multiplexing information.

It can be learned from the foregoing description of the overhead code block in the FlexE standard that the overhead code block is terminated hop by hop. Therefore, if the multiplexed code block is a first overhead code block, and the multiplexing information is carried in a reserved field of the first overhead code block, the forwarding the multiplexed code block stream may include: stripping the first overhead code block from the multiplexed code block stream at an ingress port, to obtain the hybrid code blocks; and sending the hybrid code blocks to an egress port, and sending the hybrid code blocks through the egress port after a third overhead code block is inserted, where the third overhead code block carries the multiplexing information. That is, the first overhead code block is stripped at the ingress, and the third overhead code block is inserted at the egress, where the third overhead code block is the same as or different from the first overhead code block. Therefore, the multiplexing information needs to be copied from the ingress to the egress.

If the multiplexed code block is a multiplexing indicator code block, for example, the multiplexing indicator code block shown in FIG. 15 or FIG. 16, the multiplexing information is carried in a specified field of the multiplexing indicator code block. In this case, the multiplexed code block stream further includes a second overhead code block, and the second overhead code block is an overhead code block that needs to be carried in an original FlexE protocol transmission scenario. In this case, the forwarding the multiplexed code block stream based on the multiplexing information may include: stripping the second overhead code block from the multiplexed code block stream at an ingress port, to obtain a hybrid code block stream that includes the multiplexing indicator code block and the hybrid code blocks; and sending the hybrid code block stream to an egress port, inserting a fourth overhead code block into the hybrid code block stream, and sending the hybrid code block stream through the egress port. That is, the second overhead code block is stripped at the ingress, and the fourth overhead code block is inserted at the egress, where the fourth overhead code block is the same as or different from the second overhead code block. Therefore, the multiplexing information is carried in the multiplexing indicator code block and is directly forwarded along with the hybrid code blocks, that is, the multiplexing information does not need to be copied from the ingress to the egress.

In embodiments of this application, the multiplexing information includes a first service identifier of the multiplexed code block stream, and a manner of determining the egress port of the multiplexed code block stream may include: determining the egress port based on the service identifier. For example, the second communication apparatus maintains a routing table, and the routing table includes a correspondence between a service identifier and an egress port. In this way, the egress port of the multiplexed code block stream can be determined by querying the first service identifier of the multiplexed code block stream in the routing table. When the multiplexed code block is the first overhead code block, the egress port of the multiplexed code block stream is the egress port of the hybrid code blocks. When the multiplexed code block is the multiplexing indicator code block, the egress port of the multiplexed code block stream is the egress port of the hybrid code block stream. A manner of forwarding the multiplexed code block received at the ingress port to the corresponding egress port through the routing table is referred to as cross-forwarding.

In a possible implementation, if the obtained multiplexed code block stream is a received multiplexed code block stream sent by another network device, the multiplexed code block stream further includes idle code blocks inserted based on a frequency offset. In this case, the forwarding the multiplexed code block based on the multiplexing information may include: performing frequency offset adjustment on the multiplexed code block stream based on the frequency offset. Optionally, frequency offset adjustment is performed on the multiplexed code block stream based on the frequency offset by adding or deleting an idle code block. For example, when an arrival rate of the multiplexed code block stream is low, an idle code block is inserted into the multiplexed code block stream to avoid stream disruption; or when an arrival rate of the multiplexed code block stream is high, an idle code block is deleted from the multiplexed code block stream to avoid code block backlog. A type of the idle code block added or deleted in the forwarding process is the same as a type of the idle code block inserted in the foregoing multiplexing process. That is, if the idle code block inserted in the multiplexing process is the two types of idle code blocks shown in FIG. 13a and FIG. 13b, the idle code block added or deleted in the forwarding process is also the two types of idle code blocks shown in FIG. 13a and FIG. 13b.

Therefore, the multiplexed code block stream is forwarded in the processing manner 1, so that an intermediate forwarding node can forward the multiplexed code block stream at a granularity of a multiplexed code block stream, that is, transmit the multiplexed code block stream at a transmission rate of the multiplexed code block stream. For example, if a transmission channel of the multiplexed code block stream is a high-bandwidth channel, the at least one service code block stream may be transmitted through the high-bandwidth channel. Therefore, the at least one service code block stream is multiplexed into one multiplexed code block stream for forwarding, so as to implement end-to-end forwarding of the multiplexed code block stream, without demultiplexing the at least one service code block stream from the multiplexed code block stream for separate forwarding, thereby increasing the forwarding scale.

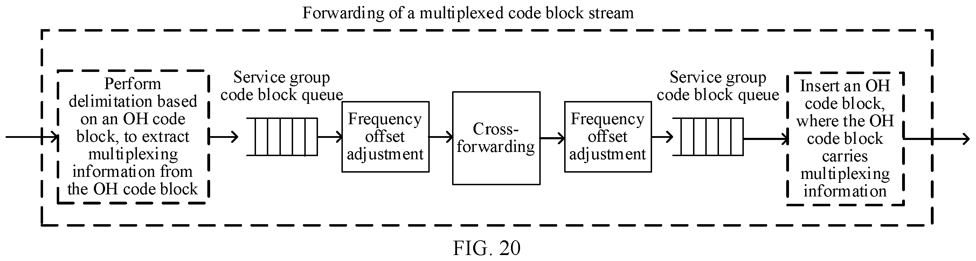

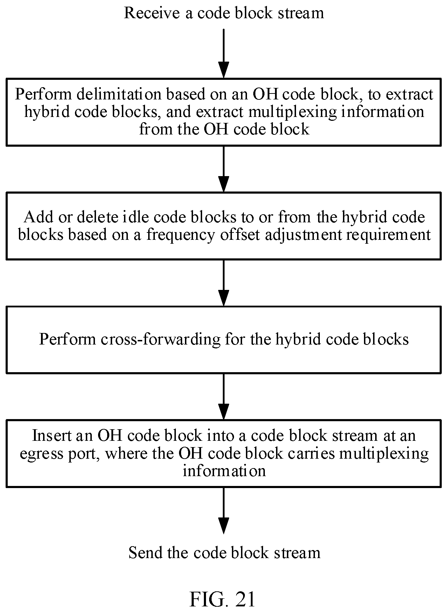

Using an example in which the multiplexed code block is an OH code block, the following describes a forwarding process in the code block processing method provided in embodiments of this application by using an example with reference to a system block diagram shown in FIG. 20 and a flowchart shown in FIG. 21. The forwarding process includes but is not limited to the following step 21 to step 24.

Step 21: Receive a code block stream, perform delimitation based on an OH code block, and extract multiplexing information from the OH code block.

Depending on an insertion rule of an OH code block, code block streams of different transmission channels may be delimited based on OH code blocks, to extract hybrid code blocks, and write the hybrid code blocks into a service group code block queue.

Step 22: Add or delete idle code blocks to or from the hybrid code blocks based on a frequency offset adjustment requirement.

Therefore, frequency offset adjustment is implemented by adding or deleting idle code blocks.

Step 23: Perform cross-forwarding for the hybrid code blocks.

Because the OH code block has been stripped, cross-forwarding for the hybrid code blocks is cross-forwarding for a multiplexed code block stream. For example, a service identifier carried in the multiplexing information is used to look up a forwarding table, to send the hybrid code blocks to a correct egress port.

Step 24: Insert an OH code block into a code block stream of the egress port, where the OH code block carries the multiplexing information.

That is, multiplexing information extracted from an ingress port needs to be copied to the egress port, so that the OH code block reinserted into the egress port carries the multiplexing information.

Processing manner 2: Demultiplex the multiplexed code block stream based on the multiplexing information.

In a possible implementation, the multiplexing information includes scheduling information, and the scheduling information includes at least one of the first scheduling ratio or a second service identifier corresponding to the at least one service code block stream; and the demultiplexing the multiplexed code block stream based on the multiplexing information may include: determining the first scheduling ratio based on the scheduling information; and extracting the hybrid code blocks from the multiplexed code block stream, and demultiplexing the at least one service code block stream from the hybrid code blocks according to the first scheduling ratio.

Optionally, when the scheduling information includes the first scheduling ratio, the first scheduling ratio in the scheduling information is directly read. When the scheduling information includes the second service identifier corresponding to the at least one service code block stream, the first scheduling ratio may be determined based on bandwidths or transmission rates respectively corresponding to a plurality of second service identifiers, or scheduling ratios respectively corresponding to a plurality of second service identifiers are obtained based on configuration information, and then the first scheduling ratio is determined based on the scheduling ratios respectively corresponding to the plurality of second service identifiers. The configuration information may be configured by a control end in advance and delivered to the second communication apparatus, or may be obtained by the second communication apparatus from a control end in real time. Optionally, the configuration information includes a correspondence between a second service identifier and a scheduling ratio. In this case, the first communication apparatus may determine the first scheduling ratio based on the configuration information.

For a manner of extracting the hybrid code blocks from the multiplexed code block stream, refer to the related descriptions in the processing manner 1. For example, if the multiplexed code block is the first overhead code block, the hybrid code blocks are delimited based on the insertion position of the first overhead code block, to extract the hybrid code blocks, and extract the multiplexing information in the first overhead code block. If the multiplexed code block is the multiplexing indicator code block, the hybrid code block stream is delimited based on the insertion position of the second overhead code block, to extract the hybrid code block stream, and then the hybrid code blocks are delimited based on the insertion position of the multiplexing indicator code block, to extract the hybrid code blocks, and extract the multiplexing information in the multiplexing indicator code block.

After the hybrid code blocks are extracted, the hybrid code blocks may be restored to the at least one service code block stream according to the first scheduling ratio. The demultiplexing process corresponds to the foregoing multiplexing process, that is, the demultiplexing process is a reverse process of the multiplexing process. Therefore, an operation performed in the multiplexing process determines a reverse operation performed in the demultiplexing process. Optionally, if idle code blocks are inserted in the multiplexing process, that is, the hybrid code blocks include the idle code blocks, the demultiplexing the at least one service code block stream from the hybrid code blocks according to the first scheduling ratio includes: first deleting the idle code blocks from the hybrid code blocks, and then demultiplexing, according to the first scheduling ratio, the at least one service code block stream from the code block stream from which the idle code blocks are deleted.

If the hybrid code blocks are directly scheduled according to the first scheduling ratio in the multiplexing process, the at least one service code block stream may be directly decomposed and restored from the code block stream from which the idle code blocks are deleted according to the first scheduling ratio. For example, the first scheduling ratio is 1:2:1. The at least one service code block stream is demultiplexed from the hybrid code blocks according to the first scheduling ratio. To be specific, a first code block in the hybrid code blocks is restored to one code block in a first service code block stream, a second code block and a third code block in the hybrid code blocks are restored to two code blocks in a second service code block stream, and a fourth code block in the hybrid code blocks is restored to one code block in a third service code block stream; and this restoration process is repeated.

When the hybrid code blocks include a concealed code block, in a process of demultiplexing the at least one service code block stream from the hybrid code blocks according to the first scheduling ratio, the concealed code block is restored to a control code block. Optionally, the concealed code block in the hybrid code blocks may be first restored to the control code block, and then the at least one service code block stream is demultiplexed from the hybrid code blocks after the restoration to the control code block; or at least one initial code block stream may be first demultiplexed from the hybrid code blocks according to the first scheduling ratio, and a concealed code block in the at least one initial code block stream is restored to a control code block, to obtain the at least one service code block stream.

A process of restoring the concealed code block to the control code block is a reverse process of concealing the control code block. Using the foregoing example in which the control code block is transcoded into the corresponding concealed code block according to the transcoding rule, a process of restoring the code blocks after the control code block is concealed may include: restoring the value 0x00 of the type field to 0x1E, to restore the C code block; and restoring the value 0x3 of the O code in the O code block to 0x0, restoring the value 0x6 of the O code to 0x5, and restoring the value 0xA of the O code to 0xC, to restore the O code block.

Optionally, if the placeholder code block is inserted or the control code block is concealed in the multiplexing scheduling process, the at least one initial code block stream may be first demultiplexed from the hybrid code blocks according to the first scheduling ratio, and the at least one service code block stream is obtained based on the at least one initial code block stream. The obtaining the at least one service code block stream based on the at least one initial code block stream may include: for a first initial code block stream in the at least one initial code block stream, when the first initial code block stream includes a placeholder code block, deleting the placeholder code block from the first initial code block stream, to obtain a first service code block stream; or when the first initial code block stream includes a concealed code block, restoring the concealed code block to a control code block, to obtain a first service code block stream; or when the first initial code block stream includes a placeholder code block and a concealed code block, deleting the placeholder code block from the first initial code block stream, and restoring the concealed code block to a control code block, to obtain the first service code block stream. The first service code block stream is a code block stream in the at least one initial code block stream.

In embodiments of this application, in addition to the first scheduling ratio, the multiplexing information further includes a first service identifier corresponding to the at least one service code block stream. Therefore, after the at least one service code block stream is demultiplexed from the multiplexed code block stream, an egress port corresponding to the at least one service code block stream may be determined based on the first service identifier corresponding to the at least one service code block stream, and the at least one service code block stream is forwarded through the egress port corresponding to the at least one service code block stream. For example, table lookup is performed based on the first service identifier corresponding to the at least one service code block stream for forwarding.

Therefore, the demultiplexing on the multiplexed code block stream is implemented in the processing manner 2, so that all receiving nodes can restore the at least one service code block stream from the multiplexed code block stream, thereby correctly forwarding the at least one service code block stream.

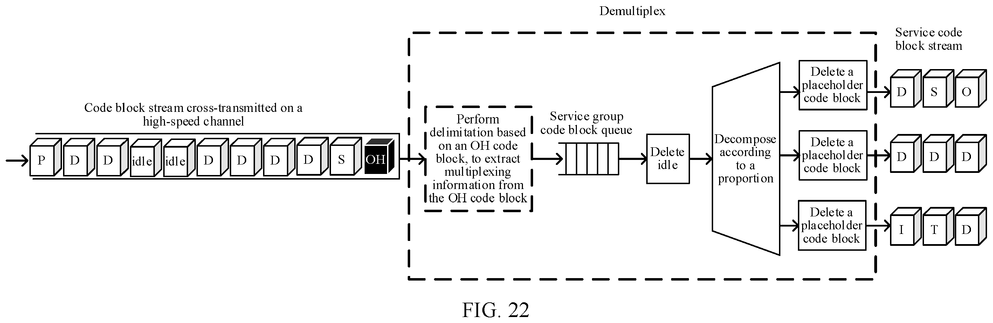

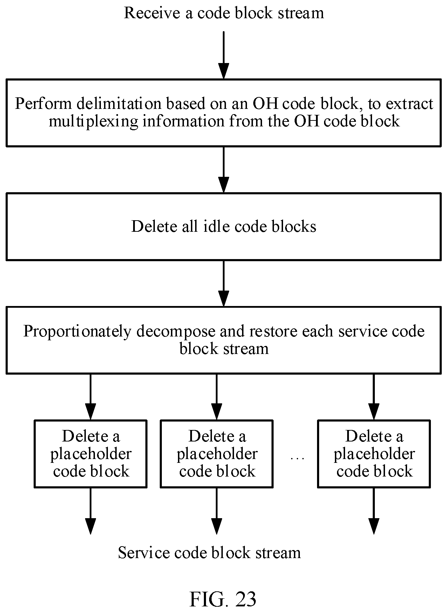

Using an example in which the multiplexed code block is an OH code block, the following describes a demultiplexing process in the code block processing method provided in embodiments of this application by using an example with reference to a system block diagram shown in FIG. 22 and a flowchart shown in FIG. 23. The demultiplexing process includes but is not limited to the following step 31 to step 34.

Step 31: Receive a code block stream, perform delimitation based on an OH code block, and extract multiplexing information from the OH code block.

For example, a received code block stream that is cross-transmitted through a high-speed channel is a multiplexed code block stream. Hybrid code blocks are extracted from the multiplexed code block stream, and the hybrid code blocks are added to a service group code block queue.

Step 32: Delete all idle code blocks from the hybrid code blocks.

Step 33: Decompose each code block stream from the hybrid code blocks according to a scheduling ratio.

Step 34: For each code block stream, delete all placeholder code blocks in each code block stream, to obtain a plurality of service code block streams.

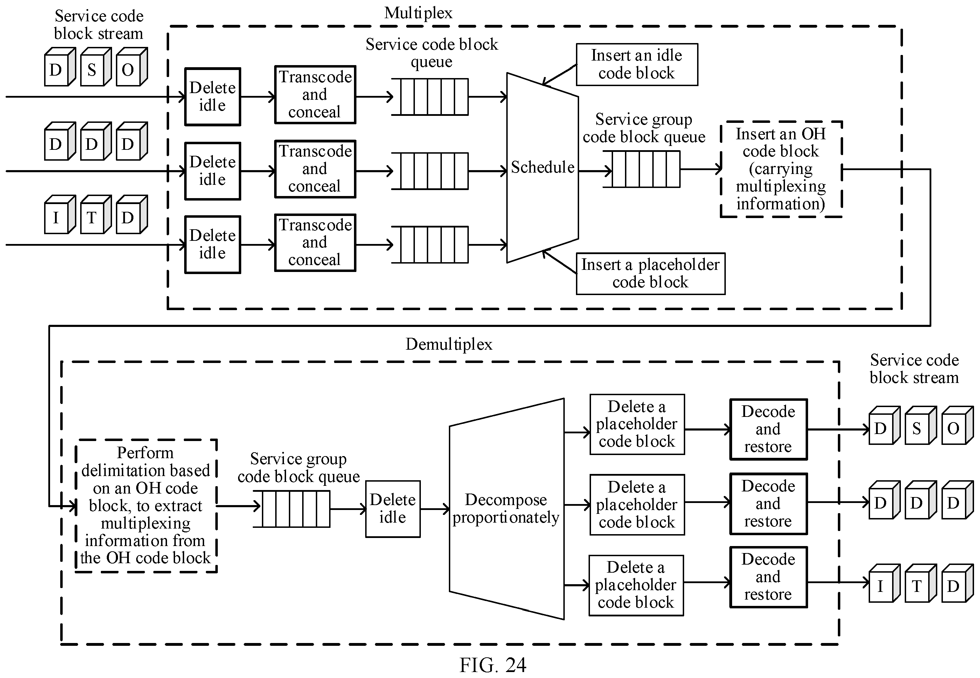

Optionally, for a scenario in which a control block is concealed in a multiplexing process, refer to a system block diagram shown in FIG. 24. Compared with the system block diagram of the multiplexing shown in FIG. 22, in FIG. 24, after all idle code blocks are deleted from each service code block stream, a control code block in each service code block stream is transcoded and concealed, and a code block after the control code block is concealed, that is, a concealed code block, is placed into the service code block queue. Compared with the system block diagram of the demultiplexing shown in FIG. 23, in FIG. 24, after all placeholder code blocks are deleted from each code block stream, a concealed control code block in each code block stream is restored.

The foregoing process mainly describes single-time multiplexing and single-time demultiplexing. The method provided in embodiments of this application may be further used for a plurality of times of multiplexing, so that the method can be used in more requirement scenarios. The plurality of times of multiplexing means a plurality of times of demultiplexing. That is, a multiplexed code block stream obtained after single-time multiplexing may be considered as a common service code block stream, and is multiplexed with another service code block stream again. In a demultiplexing process, the multiplexed code block stream is demultiplexed layer by layer until an initial service code block stream is restored. The plurality of times of multiplexing and the plurality of times of demultiplexing may be implemented on a same network device, or may be implemented on different network devices.

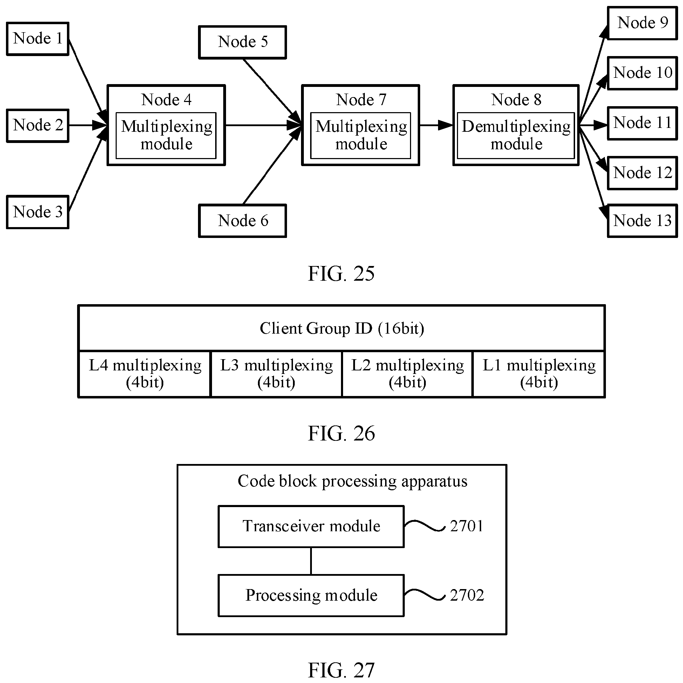

For example, refer to a diagram of a scenario of a plurality of multiplexing processes shown in FIG. 25. A node 1 sends a service code block stream 1 to a node 4, a node 2 sends a service code block stream 2 to the node 4, and a node 3 sends a service code block stream 3 to the node 4. The node 4 multiplexes the three service code block streams into a multiplexed code block stream 1 through a multiplexing module, and sends the multiplexed code block stream 1 to a node 7, a node 5 sends a service code block stream 4 to the node 7, and a node 6 sends a service code block stream 5 to the node 7. The node 7 multiplexes the two service code block streams and the multiplexed code block stream 1 into a multiplexed code block stream 2, and sends the multiplexed code block stream 2 to a node 8. The node 8 demultiplexes the multiplexed code block stream 2 through a demultiplexing module, restores the service code block stream 1 to the service code block stream 5, and respectively sends the service code block stream 1 to a node 9, sends the service code block stream 2 to a node 10, sends the service code block stream 3 to a node 11, sends the service code block stream 4 to a node 12, and sends the service code block stream 5 to a node 13.

In a possible implementation, any service code block stream in the at least one service code block stream obtained by the first communication apparatus in step 901 may be obtained by scheduling at least one sub-service code block stream according to a second scheduling ratio. In other words, the any service code block stream is a code block stream obtained after the at least one sub-service code block stream is multiplexed. For a processing process of multiplexing the at least one sub-service code block stream into the any service code block stream, refer to the multiplexing process shown in FIG. 9. Details are not described herein again.

In this case, the any service code block stream is referred to as a sub-multiplexed code block stream, and a first service identifier of the sub-multiplexed code block stream is a second service identifier of the any service code block stream. Optionally, the multiplexing information further includes at least one of the second scheduling ratio or a third service identifier corresponding to the at least one sub-service code block stream. After the at least one service code block stream is demultiplexed from the hybrid code block according to the first scheduling ratio, the at least one sub-service code block stream may be demultiplexed from the any service code block stream according to the second scheduling ratio. For a demultiplexing process of any service code block stream, refer to the demultiplexing process of the multiplexed code block stream. Details are not described herein again.

For example, using an example in which the multiplexing information includes service identifiers respectively corresponding to the plurality of times of multiplexing, the Client Group ID field shown in FIG. 15 or FIG. 16 may be defined hierarchically. Referring to a diagram of hierarchical definition shown in FIG. 26, 16 bits of the Client Group ID field are divided into four 4-bit fields, where each 4-bit field is used to indicate a service identifier of one level of multiplexing, the lowest 4 bits correspond to a service identifier of first multiplexing, that is, L1 multiplexing, and the highest 4 bits correspond to a service identifier of fourth multiplexing, that is, L4 multiplexing, so that the Client Group ID field can carry service identifiers of four times of multiplexing at most.

In conclusion, in the code block processing method shown in FIG. 19, after the multiplexed code block stream is obtained, the multiplexed code block stream can be processed based on the multiplexing information carried in the multiplexed code block in the multiplexed code block stream. In this way, the at least one service code block stream is multiplexed into one multiplexed code block stream for processing, and accuracy of processing the multiplexed code block stream is ensured by using the multiplexing information.

The code block processing method in embodiments of this application is described above. Corresponding to the method, an embodiment of this application further provides a code block processing apparatus. FIG. 27 is a diagram of a structure of a code block processing apparatus according to an embodiment of this application. Based on the following plurality of modules shown in FIG. 27, the code block processing apparatus shown in FIG. 27 can perform all or some operations performed by a first communication apparatus or a second communication apparatus. It should be understood that the apparatus may include more additional modules than the shown modules or a part of the shown modules may be omitted. This is not limited in embodiments of this application. As shown in FIG. 27, the apparatus includes:
a transceiver module 2701, configured to perform the receiving and/or sending related operation in the method shown in FIG. 9; and a processing module 2702, configured to perform an operation other than the receiving and/or sending related operation in the method shown in FIG. 9; or a transceiver module 2701, configured to perform an operation other than the receiving and/or sending related operation in the method shown in FIG. 19; and a processing module 2702, configured to perform an operation other than the receiving and/or sending related operation in the method shown in FIG. 19.

In a possible implementation, the transceiver module 2701 includes a receiving module and/or a sending module. The receiving module is configured to perform the receiving related operation, and the sending module is configured to perform the sending related operation.

When the transceiver module 2701 is configured to perform the receiving and/or sending related operation in the method shown in FIG. 9, and the processing module 2702 is configured to perform the operation other than the receiving and/or sending related operation in the method shown in FIG. 9, the processing module 2702 is configured to: obtain at least one service code block stream; and obtain a multiplexed code block stream based on the at least one service code block stream, where the multiplexed code block stream includes hybrid code blocks and a multiplexed code block, the hybrid code blocks are code block obtained by scheduling code blocks in the at least one service code block stream according to a first scheduling ratio, the multiplexed code block carries multiplexing information, and the multiplexing information is used to process the multiplexed code block stream.

In a possible implementation, the processing module 2702 is further configured to: in a process of scheduling the code blocks in the at least one service code block stream according to the first scheduling ratio, if a first quantity of code blocks included in a first service code block stream is less than a second quantity of code blocks scheduled in the first service code block stream, insert a third quantity of placeholder code blocks, where the first service code block stream is a code block stream in the at least one service code block stream, and the third quantity is a difference between the second quantity and the first quantity.

In a possible implementation, the transceiver module 2702 is configured to receive a code block stream transmitted on at least one channel, where the code block stream transmitted on the at least one channel includes a first code block stream; and the processing module 2702 is configured to delete all idle code blocks from the first code block stream, to obtain the first service code block stream, where the first service code block stream is a code block stream in the at least one service code block stream.

In a possible implementation, the processing module 2702 is further configured to insert idle code blocks into the scheduled code blocks based on a frequency offset, where the frequency offset is a frequency offset existing between nodes configured to transmit the multiplexed code block stream, there are at least two idle code blocks, and a Hamming distance between the at least two idle code blocks meets a distance requirement.

In a possible implementation, the hybrid code blocks include a concealed code block, and the concealed code block is obtained by concealing a control code block in the at least one service code block stream.

In a possible implementation, the multiplexed code block is a first overhead code block, the multiplexing information is carried in a reserved field of the first overhead code block, and the first overhead code block is used to extract the hybrid code blocks from the multiplexed code block stream.

In a possible implementation, the multiplexed code block is a multiplexing indicator code block, the multiplexing information is carried in a specified field of the multiplexing indicator code block, the multiplexed code block stream further includes a second overhead code block, and the second overhead code block is used to extract the multiplexing indicator code block and the hybrid code blocks from the multiplexed code block stream.

In a possible implementation, a service code block stream in the at least one service code block stream is obtained by scheduling at least one sub-service code block stream according to a second scheduling ratio.

In a possible implementation, the first scheduling ratio is determined based on a bandwidth or a transmission rate of the at least one service code block stream.

In a possible implementation, the transceiver module 2702 is further configured to: determine an egress port based on a first service identifier of the multiplexed code block stream, and send the multiplexed code block stream through the egress port, where a transmission rate of the multiplexed code block stream is greater than the transmission rate of the at least one service code block stream.

In a possible implementation, the multiplexing information includes at least one of the first service identifier or scheduling information of the multiplexed code block stream, and the scheduling information includes at least one of the first scheduling ratio or a second service identifier corresponding to the at least one service code block stream.

When the transceiver module 2701 is configured to perform the operation other than the receiving and/or sending related operation in the method shown in FIG. 19, and the processing module 2702 is configured to perform the operation other than the receiving and/or sending related operation in the method shown in FIG. 19, the processing module 2702 is configured to: obtain a multiplexed code block stream, where the multiplexed code block stream includes hybrid code blocks and a multiplexed code block, the hybrid code blocks are code blocks obtained by scheduling code blocks in at least one service code block stream according to a first scheduling ratio, and the multiplexed code block carries multiplexing information; and process the multiplexed code block stream based on the multiplexing information.

In a possible implementation, the multiplexing information includes scheduling information, and the scheduling information includes the first scheduling ratio; and the processing module 2702 is configured to: extract the hybrid code blocks from the multiplexed code block stream, and demultiplex the at least one service code block stream from the hybrid code blocks according to the first scheduling ratio.

In a possible implementation, the processing module 2702 is configured to: when the hybrid code blocks include idle code blocks, delete the idle code blocks from the hybrid code blocks; and demultiplex, according to the first scheduling ratio, the at least one service code block stream from the hybrid code blocks having the idle code blocks deleted.

In a possible implementation, the processing module 2702 is configured to: demultiplex at least one initial code block stream from the hybrid code blocks according to the first scheduling ratio, where the at least one initial code block stream includes a first initial code block stream; and when the first initial code block stream includes a placeholder code block, delete the placeholder code block from the first initial code block stream, to obtain a first service code block stream, where the first service code block stream is a code block stream in the at least one service code block stream.

In a possible implementation, the hybrid code blocks include a concealed code block, and in a process of demultiplexing the at least one service code block stream from the hybrid code blocks according to the first scheduling ratio, the concealed code block is restored to a control code block.

In a possible implementation, a service code block stream in the at least one service code block stream is obtained by scheduling at least one sub-service code block stream according to a second scheduling ratio, and the scheduling information further includes the second scheduling ratio; and the processing module 2702 is further configured to demultiplex the at least one sub-service code block stream from the service code block stream according to the second scheduling ratio.

In a possible implementation, the multiplexing information includes a first service identifier of the multiplexed code block stream; and the processing module 2702 is configured to forward the multiplexed code block stream based on the first service identifier.

In a possible implementation, the multiplexed code block is a first overhead code block, and the multiplexing information is carried in a reserved field of the first overhead code block; the processing module 2702 is configured to strip the first overhead code block from the multiplexed code block stream at an ingress port, to obtain the hybrid code blocks; and the transceiver module 2702 is configured to: send the hybrid code blocks to an egress port determined based on the first service identifier, and send the hybrid code blocks through the egress port after a third overhead code block is inserted, where the third overhead code block carries the multiplexing information.

In a possible implementation, the multiplexed code block is a multiplexing indicator code block, the multiplexing information is carried in a specified field of the multiplexing indicator code block, and the multiplexed code block stream further includes a second overhead code block; the processing module 2702 is configured to strip the second overhead code block from the multiplexed code block stream at an ingress port, to obtain the multiplexing indicator code block and the hybrid code blocks; and the transceiver module 2702 is configured to: send the multiplexing indicator code block and the hybrid code blocks to an egress port determined based on the first service identifier, and send the multiplexing indicator code block and the hybrid code blocks through the egress port after a fourth overhead code block is inserted.

In a possible implementation, the transceiver module 2702 is configured to receive the multiplexed code block stream, where the multiplexed code block stream further includes idle code blocks inserted based on a frequency offset; and the processing module 2702 is configured to perform frequency offset adjustment on the multiplexed code block stream based on the frequency offset.

It should be understood that, when the apparatus provided in FIG. 27 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatus provided in the foregoing embodiment and the method embodiment pertain to a same concept. For a specific implementation process and beneficial effects of the apparatus, refer to the method embodiment. Details are not described herein again.

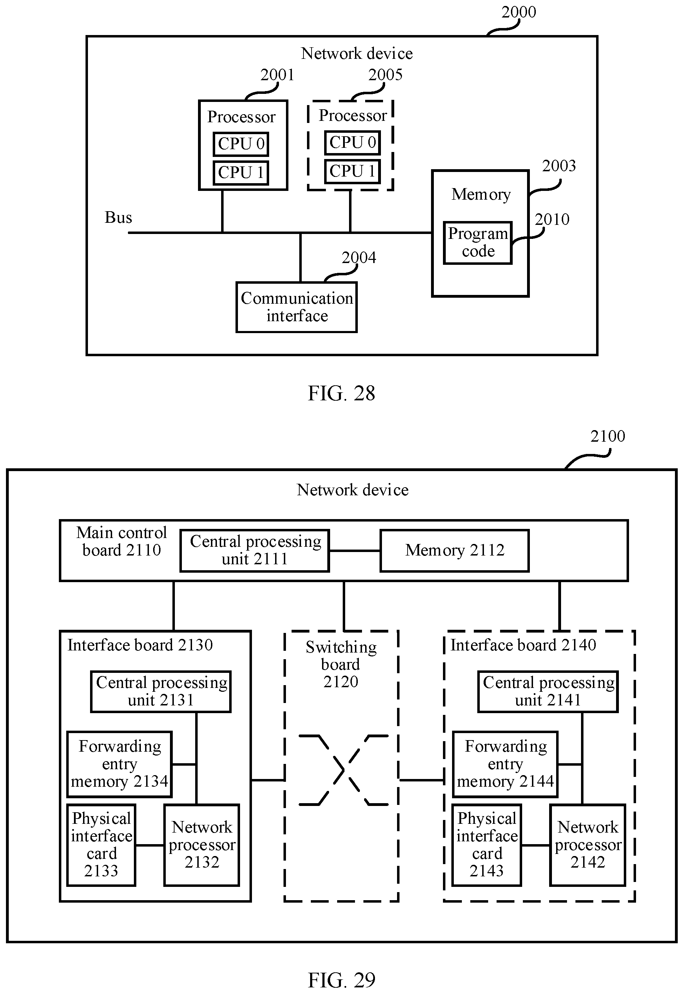

FIG. 28 is a diagram of a structure of a network device 2000 according to an example embodiment of this application. The network device 2000 shown in FIG. 28 is configured to perform operations related to the code block processing method shown in FIG. 9 or FIG. 19. The network device 2000 is, for example, a switch or a router. The network device 2000 may be implemented by using a general bus architecture.

As shown in FIG. 28, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one line is used for representation in FIG. 28, but this does not mean that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disk storage, an optical disc storage (including compact disc, laser disc, optical disc, digital versatile disc, Blu-ray disc, and the like), a magnetic disk storage medium or another magnetic storage device, or any other medium that can be used to carry or store desired program code in a form of instruction or data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus such as a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In embodiments of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 28. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 shown in FIG. 28. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions in this application, and the processor 2001 may execute the program code 2010 stored in the memory 2003. In other words, the network device 2000 may implement, by using the processor 2001 and the program code 2010 in the memory 2003, the code block processing methods provided in the method embodiments. The program code 2010 may include one or more software modules. Optionally, the processor 2001 may also store program code or instructions for executing the solutions of this application.

In a specific embodiment, the network device 2000 in embodiments of this application may correspond to the first communication apparatus in the foregoing method embodiments, and the processor 2001 in the network device 2000 reads instructions in the memory 2003, so that the network device 2000 shown in FIG. 28 can perform all or some of operations performed by the first communication apparatus.

Specifically, the processor 2001 is configured to: obtain at least one service code block stream; and obtain a multiplexed code block stream based on the at least one service code block stream, where the multiplexed code block stream includes hybrid code blocks and a multiplexed code block, the hybrid code blocks are code blocks obtained by scheduling code blocks in the at least one service code block stream according to a first scheduling ratio, the multiplexed code block carries multiplexing information, and the multiplexing information is used to process the multiplexed code block stream.

For brevity, another optional implementation is not described herein.

For another example, the network device 2000 in embodiments of this application may correspond to the second communication apparatus in the foregoing method embodiments, and the processor 2001 in the network device 2000 reads instructions in the memory 2003, so that the network device 2000 shown in FIG. 28 can perform all or some of operations performed by the second communication apparatus.

Specifically, the processor 2001 is configured to: obtain a multiplexed code block stream, where the multiplexed code block stream includes hybrid code blocks and a multiplexed code block, the hybrid code blocks are code blocks obtained by scheduling code blocks in at least one service code block stream according to a first scheduling ratio, and the multiplexed code block carries multiplexing information; and process the multiplexed code block stream based on the multiplexing information.

For brevity, another optional implementation is not described herein.

The network device 2000 may further correspond to the code block processing apparatus shown in FIG. 27, and each functional module in the code block processing apparatus is implemented by using software of the network device 2000. In other words, the functional module included in the code block processing apparatus is generated after the processor 2001 of the network device 2000 reads the program code 2010 stored in the memory 2003.

The steps of the code block processing method shown in FIG. 9 or FIG. 19 are completed by using an integrated logic circuit of hardware in the processor of the network device 2000 or instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

FIG. 29 is a diagram of a structure of a network device 2100 according to another example embodiment of this application. The network device 2100 shown in FIG. 29 is configured to perform all or some operations related to the code block processing method shown in FIG. 9 or FIG. 19. The network device 2100 is, for example, a switch or a router. The network device 2100 may be implemented by using a general bus architecture.

As shown in FIG. 29, the network device 2100 includes a main control board 2110 and an interface board 2130.

The main control board is also referred to as a main processing unit (main processing unit, MPU) or a route processor card (route processor card). The main control board 2110 is configured to: control and manage each component in the network device 2100, including functions of route calculation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to: provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an egress interface that correspond to the destination address, and forwards the packet to the egress interface corresponding to the destination address. Processing of an uplink packet may include: processing of an ingress interface of the packet and forwarding table lookup; and processing of a downlink packet may include: forwarding table lookup and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device 2100 has a plurality of interface boards, the switching board 2120 is configured to perform data exchange between the interface boards. For example, the interface board 2130 and the interface board 2140 may communicate with each other through the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110, the interface board 2130, and the interface board 2140. The main control board 2110 communicates with the interface board 2130 and the interface board 2140 through the IPC channel.

Logically, the network device 2100 includes a control plane and a forwarding plane. The control plane includes a main control board 2110 and a central processing unit 2111. The forwarding plane includes components that perform forwarding, for example, a forwarding entry memory 2134, a physical interface card 2133, and a network processor 2132. The control plane performs functions such as a router, generating a forwarding table, processing signaling and protocol packets, and configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the network device in the centralized architecture. Optionally, the form of the network device may alternatively be a single board. That is, there is no switching board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the network device 2100 corresponds to the code block processing apparatus shown in FIG. 27. In some embodiments, the transceiver module 2701 in the code block processing apparatus shown in FIG. 27 is equivalent to the physical interface card 2133 in the network device 2100, and the determining module 2702 is equivalent to the central processing unit 2111 or the network processor 2132 in the network device 2100.

An embodiment of this application further provides a code block processing system. The code block processing system includes a first communication apparatus and a second communication apparatus. For example, the first communication apparatus is the network device 2000 shown in FIG. 28 or the network device 2100 shown in FIG. 29, and the second communication apparatus is the network device 2000 shown in FIG. 28 or the network device 2100 shown in FIG. 29. For the code block processing method performed by the first communication apparatus and the second communication apparatus, refer to the related descriptions in the embodiment shown in FIG. 9 or FIG. 19. Details are not described herein again.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is caused to perform a method that needs to be performed by a first communication apparatus or a second communication apparatus.

It should be understood that the processor may be a CPU, or may be another general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to cause a computer to implement any one of the foregoing code block processing methods.

An embodiment of this application further provides a computer program (product). When the computer program is executed by a computer, a processor or the computer may be caused to perform corresponding steps and/or procedures in the foregoing method embodiments.

An embodiment of this application further provides a chip, including a processor, configured to: invoke instructions from a memory and run the instructions stored in the memory, to cause a communication device on which the chip is installed to perform any one of the foregoing code block processing methods.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing code block processing methods.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When software is used to implement the embodiments, all or a part of the embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division of modules is merely division of logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, but B may alternatively be determined based on A and/or other information.

It should be further understood that "an embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A code block processing method, wherein the method comprises:
obtaining at least one service code block stream; and
obtaining a multiplexed code block stream based on the at least one service code block stream, wherein the multiplexed code block stream comprises hybrid code blocks and a multiplexed code block, the hybrid code blocks are code blocks obtained by scheduling code blocks in the at least one service code block stream according to a first scheduling ratio, the multiplexed code block carries multiplexing information, and the multiplexing information is used to process the multiplexed code block stream.

2. The method according to claim 1, wherein the method further comprises:
in a process of scheduling the code blocks in the at least one service code block stream according to the first scheduling ratio, if a first quantity of code blocks comprised in a first service code block stream is less than a second quantity of code blocks scheduled in the first service code block stream, inserting a third quantity of placeholder code blocks, wherein the first service code block stream is a code block stream in the at least one service code block stream, and the third quantity is a difference between the second quantity and the first quantity.

3. The method according to claim 1 or 2, wherein the obtaining the at least one service code block stream comprises:
receiving a code block stream transmitted on at least one channel, wherein the code block stream transmitted on the at least one channel comprises a first code block stream; and
deleting all idle code blocks from the first code block stream, to obtain the first service code block stream, wherein the first service code block stream is a code block stream in the at least one service code block stream.

4. The method according to any one of claims 1 to 3, wherein the method further comprises:
inserting idle code blocks into the scheduled code blocks based on a frequency offset, wherein the frequency offset is a frequency offset existing between nodes configured to transmit the multiplexed code block stream, there are at least two idle code blocks, and a Hamming distance between the at least two idle code blocks meets a distance requirement.

5. The method according to any one of claims 1 to 4, wherein the hybrid code blocks comprise a concealed code block, and the concealed code block is obtained by concealing a control code block in the at least one service code block stream.

6. The method according to any one of claims 1 to 5, wherein the multiplexed code block is a first overhead code block, the multiplexing information is carried in a reserved field of the first overhead code block, and the first overhead code block is used to extract the hybrid code blocks from the multiplexed code block stream.

7. The method according to any one of claims 1 to 5, wherein the multiplexed code block is a multiplexing indicator code block, the multiplexing information is carried in a specified field of the multiplexing indicator code block, the multiplexed code block stream further comprises a second overhead code block, and the second overhead code block is used to extract the multiplexing indicator code block and the hybrid code blocks from the multiplexed code block stream.

8. The method according to any one of claims 1 to 7, wherein a service code block stream in the at least one service code block stream is obtained by scheduling at least one sub-service code block stream according to a second scheduling ratio.

9. The method according to any one of claims 1 to 8, wherein the first scheduling ratio is determined based on a bandwidth or a transmission rate of the at least one service code block stream.

10. The method according to any one of claims 1 to 9, wherein after the obtaining the multiplexed code block stream based on the at least one service code block stream, the method further comprises:
determining an egress port based on a first service identifier of the multiplexed code block stream, and sending the multiplexed code block stream through the egress port, wherein a transmission rate of the multiplexed code block stream is greater than the transmission rate of the at least one service code block stream.

11. The method according to any one of claims 1 to 10, wherein the multiplexing information comprises at least one of the first service identifier or scheduling information of the multiplexed code block stream, and the scheduling information comprises at least one of the first scheduling ratio or a second service identifier corresponding to the at least one service code block stream.

12. A code block processing method, wherein the method comprises:
obtaining a multiplexed code block stream, wherein the multiplexed code block stream comprises hybrid code blocks and a multiplexed code block, the hybrid code blocks are code blocks obtained by scheduling code blocks in at least one service code block stream according to a first scheduling ratio, and the multiplexed code block carries multiplexing information; and
processing the multiplexed code block stream based on the multiplexing information.

13. The method according to claim 12, wherein the multiplexing information comprises scheduling information, and the scheduling information comprises the first scheduling ratio; and the processing the multiplexed code block stream based on the multiplexing information comprises:
extracting the hybrid code blocks from the multiplexed code block stream, and demultiplexing the at least one service code block stream from the hybrid code blocks according to the first scheduling ratio.

14. The method according to claim 13, wherein the demultiplexing the at least one service code block stream from the hybrid code blocks according to the first scheduling ratio comprises:
when the hybrid code blocks comprise idle code blocks, deleting the idle code blocks from the hybrid code blocks; and
demultiplexing, according to the first scheduling ratio, the at least one service code block stream from the hybrid code blocks having the idle code blocks deleted.

15. The method according to claim 13, wherein the demultiplexing the at least one service code block stream from the hybrid code blocks according to the first scheduling ratio comprises:
demultiplexing at least one initial code block stream from the hybrid code blocks according to the first scheduling ratio, wherein the at least one initial code block stream comprises a first initial code block stream; and
when the first initial code block stream comprises a placeholder code block, deleting the placeholder code block from the first initial code block stream, to obtain a first service code block stream, wherein the first service code block stream is a code block stream in the at least one service code block stream.

16. The method according to claim 13, wherein the hybrid code blocks comprise a concealed code block, and in a process of demultiplexing the at least one service code block stream from the hybrid code blocks according to the first scheduling ratio, the concealed code block is restored to a control code block.

17. The method according to any one of claims 13 to 16, wherein a service code block stream in the at least one service code block stream is obtained by scheduling at least one sub-service code block stream according to a second scheduling ratio, and the scheduling information further comprises the second scheduling ratio; and after the demultiplexing the at least one service code block stream from the hybrid code blocks according to the first scheduling ratio, the method further comprises:
demultiplexing the at least one sub-service code block stream from the service code block stream according to the second scheduling ratio.

18. The method according to claim 12, wherein the multiplexing information comprises a first service identifier of the multiplexed code block stream; and the processing the multiplexed code block stream based on the multiplexing information comprises:
forwarding the multiplexed code block stream based on the first service identifier.

19. The method according to claim 18, wherein the multiplexed code block is a first overhead code block, and the multiplexing information is carried in a reserved field of the first overhead code block; and the forwarding the multiplexed code block stream based on the first service identifier comprises:
stripping the first overhead code block from the multiplexed code block stream at an ingress port, to obtain the hybrid code blocks; and
sending the hybrid code blocks to an egress port determined based on the first service identifier, and sending the hybrid code blocks through the egress port after a third overhead code block is inserted, wherein the third overhead code block carries the multiplexing information.

20. The method according to claim 18, wherein the multiplexed code block is a multiplexing indicator code block, the multiplexing information is carried in a specified field of the multiplexing indicator code block, and the multiplexed code block stream further comprises a second overhead code block; and the forwarding the multiplexed code block stream based on the first service identifier comprises:
stripping the second overhead code block from the multiplexed code block stream at an ingress port, to obtain the multiplexing indicator code block and the hybrid code blocks; and
sending the multiplexing indicator code block and the hybrid code blocks to an egress port determined based on the first service identifier, and sending the multiplexing indicator code block and the hybrid code blocks through the egress port after a fourth overhead code block is inserted.

21. The method according to claim 12, wherein the obtaining the multiplexed code block stream comprises:
receiving the multiplexed code block stream, wherein the multiplexed code block stream further comprises idle code blocks inserted based on a frequency offset; and
the processing the multiplexed code block based on the multiplexing information comprises:
performing frequency offset adjustment on the multiplexed code block stream based on the frequency offset.

22. A code block processing apparatus, wherein the apparatus comprises:
a transceiver module, configured to perform a receiving and/or sending related operation in the method according to any one of claims 1 to 11, or configured to perform a receiving and/or sending related operation in the method according to any one of claims 12 to 21; and
a processing module, configured to perform an operation other than the receiving and/or sending related operation in the method according to any one of claims 1 to 11, or configured to perform an operation other than the receiving and/or sending related operation in the method according to any one of claims 12 to 21.

23. A network device, wherein the network device comprises a processor, wherein the processor is coupled to a memory, the memory stores at least one program instruction or code, and the at least one program instruction or the code is loaded and executed by the processor, to cause the network device to implement the code block processing method according to any one of claims 1 to 21.

24. A code block processing system, wherein the code block processing system comprises a first communication apparatus and a second communication apparatus; and
the first communication apparatus is configured to perform the code block processing method according to any one of claims 1 to 11, and the second communication apparatus is configured to perform the code block processing method according to any one of claims 12 to 21.

25. A computer-readable storage medium, wherein the computer storage medium stores at least one instruction, and the at least one instruction is loaded and executed by a processor, to cause a computer to implement the code block processing method according to any one of claims 1 to 21.

26. A computer program product, wherein the computer program product comprises computer program code, and the computer program code is loaded and executed by a computer, to cause the computer to implement the code block processing method according to any one of claims 1 to 21.
